(19) Europäisches Patentamt

European Patent Office

Office européen des brevets

(11) Veröffentlichungsnummer: **0 285 855 B1**

(12) **EUROPÄISCHE PATENTSCHRIFT**

(45) Veröffentlichungstag der Patentschrift: **12.08.92**

(21) Anmeldenummer: **88103927.5**

(22) Anmeldetag: **11.03.88**

(51) Int. Cl.⁵: **B65B 53/02**, B65B 9/13

(54) **Verfahren und Vorrichtung zum Verpacken von Gegenständen mit einer bahnförmigen Kunststoffolie.**

(30) Priorität: **11.03.87 DE 3707877**
**04.05.87 DE 3714811**
**08.03.88 DE 8803121 U**

(43) Veröffentlichungstag der Anmeldung:
**12.10.88 Patentblatt 88/41**

(45) Bekanntmachung des Hinweises auf die
Patenterteilung:
**12.08.92 Patentblatt 92/33**

(84) Benannte Vertragsstaaten:
**DE ES FR GB IT SE**

(56) Entgegenhaltungen:
**WO-A-82/03833**
**DE-A- 3 115 911**
**FR-A- 2 013 214**
**FR-A- 2 316 127**

(73) Patentinhaber: **KURT LACHENMEIER A/S**
**Fynsgade 8-10**
**DK-6400 Soenderborg(DK)**

(72) Erfinder: **Lachenmeier, Kurt**
**Gustav Johannsensvej 8**
**DK-6400 Soenderborg(DK)**
Erfinder: **Thomsen, Flemming**
**Dyrkobbel 39**
**DK-6300 Graasten(DK)**

(74) Vertreter: **Patentanwälte Kirschner & Grosse**
**Forstenrieder Allee 59**
**W-8000 München 71(DE)**

Rank Xerox (UK) Business Services

**Beschreibung**

Die Erfindung betrifft ein Verfahren und eine Vorrichtung zum Verpacken von Gegenständen mit einer bahnförmigen Kunststoffolie. Insbesondere beziehen sich erfindungsgemäßes Verfahren und Vorrichtung auf das Verpacken von gestapeltem Gut, welches auf einer Palette abgesetzt ist.

Es ist bekannt, solche Stapel mit einer Schrumpffolie, welche unter Wärmeeinwirkung schrumpft, zu überziehen, wozu eine schlauchförmige Kunststoffolie verwendet wird, deren Ende an einem Schrumpfrahmen befestigt wird, wonach die schlauchförmige Schrumpffolie entfaltet und mittels eines Gebläses tonnenförmig aufgeblasen wird. Anschließend wird der Schrumpfrahmen in vertikaler Richtung von oben über den Stapel geführt. Beim Zurücklaufen des Schrumpfrahmens wird die so über den Stapel gelegte Folie durch Wärmeeinwirkung auf den Stapel aufgeschrumpft.

Aus der DE-OS 31 15 911 ist es weiterhin bekannt, eine Ladeeinheit mit einer monoaxial schrumpfenden Polyäthylenflachfolie in schraubenförmigen Linien von unten nach oben stramm zu umwickeln und anschließend die Folie aufzuschrumpfen. Dazu weist die Vorrichtung einen horizontalen Drehteller für das Aufstellen und Drehen der Ladeeinheit und einer Halte- und Führungseinrichtung sowie eine Schrumpfleiste auf. Diese vorbekannte Vorrichtung ist insbesondere für schweres Ladegut geeignet, weist jedoch den Nachteil auf, daß bei bestimmten, insbesondere wärmeempfindlichen Gütern, wie beispielsweise pharmazeutischen Produkten, eine Verpackung nicht möglich ist, da diese nicht der zum Schrumpfen über die Seitenflächen aufgebrachten Wärme ausgesetzt werden dürfen.

Da eine Schrumpfleiste verwendet wird, kann der Aufschrumpfvorgang nur bei einer niedrigen Umdrehungsgeschwindigkeit des Ladegutes vorgenommen werden, so daß der Wirkungsgrad der Verpackungsvorrichtung vergleichsweise gering ist.

Aus der FR-PS 23 16 127 ist weiterhin eine Vorrichtung bekannt, bei welcher aus einer schlauchförmigen Kunststoffolie eine Kunststoffhaube durch Abschneiden und Zusammenschweißen des oberen Schlauchendes hergestellt wird, diese Haube von oben nach unten über das Ladegut gezogen wird, und anschließend aufgeschrumpft wird. Abgesehen von dem wie oben beschriebenen Nachteil, daß es eine Reihe von Gütern gibt, bei welchen ein Aufschrumpfen der Folie durch Wärmeeinwirkung nicht gewünscht bzw. nicht möglich ist, erfordert diese vorbekannte Vorrichtung bestimmte Schlauchgrößen, um konfektionierte Hauben herstellen zu können.

Der Erfindung liegt daher die Aufgabe zugrunde, ein Verpackungsverfahren sowie eine entsprechende Vorrichtung zu schaffen, welche auch zur strammen Verpackung wärmeempfindlicher Güter verwendet werden kann, dabei einen hohen Wirkungsgrad hat und welche vielseitiger anwendbar ist als der bekannte Stand der Technik.

Diese Aufgabe wird verfahrensseitig durch die kennzeichnenden Merkmale des Patentanspruches 1, vorrichtungsseitig durch die Merkmale des Patentanspruches 5 gelöst. Weitere vorteilhafte Ausgestaltungen der Erfindung ergeben sich aus den Unteransprüchen.

Gemäß der Erfindung wird die bahn- bzw. schlauchförmige Kunststoffolie gedehnt und in gedehntem Zustand zumindest auf die Seitenflächen des Gegenstandes aufgebracht, wobei die gedehnte Kunststoffolie die Seitenflächen des verpackten Gegenstandes unter Zug umspannt und die oberen und/oder unteren Endbereiche der Folienverpackung nach Aufbringung der Kunststoffolie zusätzlich noch mittels Wärmeeinwirkung geschrumpft werden. Während somit beim bekannten Heißschrumpfverfahren die Kunststoffolie im im wesentlichen entspannten Zustand über den zu verpackenden Gegenstand gezogen wurde, wobei die vom entspannten Kunststoffschlauch eingeschlossene Querschnittsfläche in der Regel größer war als der entsprechende Querschnitt des Gegenstandes, und anschließend das Folienmaterial durch Hitzewirkung geschrumpft wurde, wird nunmehr erfindungsgemäß so verfahren, daß das schlauchförmige Kunststoffmaterial im entspannten Zustand eine wesentlich kleinere Querschnittsfläche als der zu verpackende Gegenstand aufweist, daß die Kunststoffolie auf den erforderlichen Querschnitt gedehnt wird und im stark gedehnten Zustand auf den zu verpackenden Gegenstand aufgebracht wird, so daß die erforderliche Festigkeit der Verpackung sich aufgrund der dem Kunststoffmaterial bei üblicher Umgebungstemperatur innewohnenden Spannkraft beruht. Die oberen und unteren Enden der Kunststoffolie, die über den Stapel abstehen, werden zusätzlich mittels Wärmeschrumpfung geschrumpft, legen sich hierdurch an den Stapel an und tragen zusätzlich zur Festigkeit der Verpackung bei. Der gesamte Verpackungsvorgang kann in einem einzigen Arbeitsvorgang erfolgen. Bei der Abwärtsbewegung eines Schrumpfrahmens wird die Kunststoffolie über den Gegenstand gezogen, in der unteren Position des Schrumpfrahmens wird das untere Ende der Kunststoffolie heißgeschrumpft und beim Zurückfahren des Schrumpfrahmens wird das obere Ende der Kunststoffolie heißgeschrumpft. Im Bereich der Seitenflächen des Verpackungsgutes wird die Kunststoffolie beim erfindungsgemäßen Verfahren nicht geschrumpft.

Als Folienmaterial eignet sich insbesondere Polyäthylen in einer Stärke zwischen 50 $\mu$ und 250 $\mu$, vorzugsweise im Bereich zwischen 80 $\mu$ und 150

μ. Solche Folien werden zum Aufbringen auf den zu verpackenden Gegenstand zweckmäßigerweise um etwa 30% gedehnt, wobei Dehnungen bis zu 50% im Bereich des möglichen liegen.

Es ist vorgesehen, daß die schlauchförmige Kunststoffolie über ihre im ungedehnten Zustand vorhandene Querschnittsfläche aufgedehnt wird, und daß die aufgedehnte Kunststoffolie im aufgedehntan Zustand über den zu verpackenden Gegenstand gezogen wird. Hierbei wird in besonders vorteilhafter Weise so verfahren, daß die schlauchförmige Kunststoffolie zunächst an ihrem freien Ende ergriffen und geöffnet wird, daß sie dann gerafft wird, daß sie anschließend in gerafftem Zustand auf den erforderlichen Querschnitt gedehnt wird, und daß sie schließlich bei gleichzeitigem Fixieren eines der Enden der abzulängenden Kunststoffbahn relativ zum Gegenstand im gerafften Zustand über den Gegenstand gezogen wird. Während somit das eine Ende des zu verwendenden Schlauchfolienabschnitts festgehalten wird, entrafft sich die gedehnte Kunststoffolie beim Überziehen des gerafften Folienabschnitts über den zu verpackenden Stapel selbsttätig, bis die Folie vollständig über den Stapel gezogen worden ist. Bei weichen Konturen eines Stapels oder einem instabilen Stapel ist es zweckmäßig, daß das geraffte Folienmaterial durch gezielten Antrieb freigegeben wird. Um das obere Ende des abzulängenden Folienabschnitts relativ zu dem zu verpackenden Gegenstand zu fixieren, kann dieses beispielsweise im Bereich der ohnehin vorhandenen Schneideinrichtung am Gerät befestigbar sein. Eine bevorzugte Alternative besteht jedoch darin, daß die schlauchförmige Kunststoffolie vor dem Überziehen über den Gegenstand an dem dem freien Ende gegenüberliegenden Ende quer zusammengeschweißt wird. Es entsteht dann eine oben geschlossene Folienhaube, die beim Überziehen des gerafften Folienmaterials über den Gegenstand kauf der Oberseite des Gegenstandes aufliegt und somit ohne zusätzliche Maßnahmen für die gewünschte Fixierung sorgt.

Nachdem das Kunststoffolienmaterial von einer Vorratsrolle abgezogen wird und gegenüberliegende Seiten der Folienbahn aufgrund von Adhäsionskräften relativ stark aneinander haften, müssen Mittel zum Entfalten des bahnförmigen Kunststoffmaterials vorgesehen sein. Dies wird zweckmäßigerweise dadurch gelöst, daß das Öffnen der schlauchförmigen Kunststoffolie durch an der Außenseite der Kunststoffolie angreifende Saugwirkung erfolgt, die mittels bekannter Sauggebläse erzeugt wird.

Eine bevorzugte Ausführungsform der Erfindung ist eine Vorrichtung zum Verpacken zum Gegenständen mit einer bahnförmigen Kunststoffolie, wobei an einem Ständer ein in vertikaler Richtung beweglicher, horizontaler, als Schrumpfrahmen ausgebildeter Rahmen montiert ist, dessen lichter Querschnitt größer ist als der maximale Querschnitt des zu verpackenden Gegenstandes, wobei eine Zuführeinrichtung zum Zuführen von Kunststoffolie von einer Vorratsrolle zum Rahmen vorgesehen ist, wobei am Rahmen zwei parallele gegenüberliegende Konsolen gelagert sind, die in Richtung aufeinanderzu und auseinander bewegbar sind, wobei an jeder der Konsolen zumindest eine Unterdruck-Saugeinrichtung angeordnet ist, die mit der Außenseite der schlauchförmigen Kunststoffolie zusammenwirkt, wobei an jeder Konsole zumindest ein Fingerelement angeordnet ist, das in das Innere der schlauchförmigen Kunststoffolie eingreift, und wobei weiterhin an jeder Konsole eine Aufschiebe-Vorrichtung zum Aufschieben eines vorwählbaren Längenabschnitts der schlauchförmigen Kunststoffolie auf die Fingerelemente in gerafftem Zustand angeordnet ist. Bei dieser Vorrichtung wird das freie, im wesentlichen noch geschlossene Ende der Kunststoffbahn bei einander angenäherten Konsolen mittels der Unterdruck-Saugeinrichtung ergriffen und anschließend werden die Konsolen zum Öffnen der Kunststofffolie auseinandergefahren. Anschließend schiebt die Aufschiebevorrichtung den vorgewählten Längenabschnitt der schlauchförmigen Kunststoffolie auf die Fingerelemente auf, so daß dieser Längenabschnitt in gerafftem Zustand von den Fingerelementen gehalten wird. Zum Aufdehnen der gerafften Kunststoffolie werden die Konsolen schließlich noch weiter auseinandergefahren.

Zweckmäßigerweise sind an jeder Konsole je zwei Saugeinrichtungen und zwei Fingerelemente angeordnet, und sowohl die Saugeinrichtungen als auch die Fingerelemente sind längs der jeweiligen Konsole, d. h. quer zur Bewegungsrichtung der Konsole, bewegbar geführt, wobei vorzugsweise jeder Saugeinrichtung ein Fingerelement zugeordnet ist und die aus Saugeinrichtung und Fingerelement bestehende Einheit gemeinsam bewegbar ist. Vorzugsweise ist jedes Fingerelement der zugeordneten Saugeinrichtung gegenüberliegend angeordnet und jedes Fingerelement aus seiner vertikalen Funktionsstellung insbesondere in eine horizontale Stellung verschwenkbar. Bei dieser Anordnung werden nach dem Öffnen der Folie die Fingerelemente aus ihrer horizontalen Stellung in die vertikale Funktionsstellung verschwenkt und anschließend wird der vorgewählte Längenabschnitt der schlauchförmigen Kunststoffolie auf die vier Finger aufgerafft. Zum weiteren Ausdehnen der Kunststoffolie werden hierbei zusätzlich zur oben erwähnten Bewegung der Konsolen die aus Fingerelement und Saugeinrichtung bestehenden Einheiten auseinandergefahren, d. h. in Richtung auf das jeweilige Ende der zugeordneten Konsole, so daß eine gleichmäßige Dehnung des gerafften Folienabschnitts erfolgt.

Gemäß einem weiteren bevorzugten Merkmal der Erfindung wird die Aufschiebevorrichtung von einem antreibbaren Drehelement gebildet, welches derart im Bereich eines Fingerelements angeordnet ist, daß es die Folie zwischen sich und dem Fingerelement aufnimmt. Insbesondere kann das antreibbare Drehelement als parallel zur Konsole verlaufende Welle ausgebildet sein, die im Bereich der beiden Fingerelemente mit einer Friktionsschicht versehen ist, wodurch eine besonders einfache Aufschiebevorrichtung geschaffen wird.

In bevorzugter Weiterbildung der Erfindung ist das antreibbare Drehelement in einer zu seiner Drehachse radialen Richtung federnd gelagert, so daß das antreibbare Drehelement beim Überziehen der Kunststoffolie auf den Gegenstand den vom Finger nach oben abgezogenen Falten der Raffung ausweichen kann.

In weiterer Ausgestaltung der erfindungsgemäßen Vorrichtung ist vorgesehen, daß der Ständer mit einer Vorratsrolle für die schlauchförmige Kunststoffolie verbunden ist, welche in ihrem zusammengefalteten Zustand auf jeder Seite einen Doppelfalz besitzt, d. h. an jeder Seite einen nach innen umgelegten Rand und zwei nach außen weisende Kanten, und daß auf den Konsolen bewegbare Greifer derart montiert sind, daß sie die schlauchförmige Kunststoffolie an den vier nach außen weisenden Kanten zum Zwecke des vorläufigen Aufweitens klemmen. Insbesondere kann bei dieser Anordnung auf jeder Saugeinrichtung ein Greifer verschwenkbar angeordnet sein. Bei dieser Anordnung werden die Greifer, nachdem die Kunststoffolie mittels der Unterdruck-Saugeinrichtungen geringfügig geöffnet wurde, aktiviert, so daß sie die vier Kanten der noch gefalteten Kunststoffolie von außen gegen die Konsole klemmen. Anschließend wird die Kunststoffolie durch weiteres Auseinanderfahren der Konsolen soweit geöffnet, bis die Fingerelemente in das Innere der Kunststoffolie eingeschwenkt werden können. Daraufhin werden die Greifer wieder deaktiviert.

Die erfindungsgemäße Stretch-Schrumpf-Anlage ist äußerst vielseitig einsetzbar. Es können Produkte, wie insbesondere sehr wärmeempfindliche Materialien, mittels Stretch-Folie verpackt werden, die zusätzlich an den Enden mittels einer Ober- bzw. Unterschrumpfung heißgeschrumpft ist.

Die beim Schrumpfvorgang erzeugte Wärme erhitzt Umgebungsluft, welche nach oben steigt und insbesondere auch die oberhalb des zu verpackenden Guts angeordnete Zuführ- und Schneideinrichtung erwärmt. Hierbei besteht die Gefahr, daß sich die Zuführ- und Schneideinrichtung in einem solchen Maße erwärmt, daß der Folienschlauch geschrumpft wird, bevor dieser über den zu verpackenden Gutstapel gezogen ist, was zu Betriebsstörungen führt. In der Praxis ist daher die Leistungsfähigkeit der bekannten Schrumpfvorrichtungen durch die für eine notwendige Abkühlung der Zuführ- und Schneideinrichtung erforderlichen Zeiten zwischen den aufeinanderfolgenden Schrumpfvorgängen beschränkt.

Gemäß einem weiteren bevorzugten Aspekt der vorliegenden Erfindung sind daher Mittel zum Fernhalten der bei der Schrumpfung erzeugten Wärme von der Zuführ- und Schneideinrichtung vorgesehen. Hierdurch wird ein übermäßiges Erhitzen der Zuführ- und Schneideinrichtung vermieden und die Leistungsfähigkeit der Anlage kann somit gesteigert werden, nachdem zwischen zwei aufeinanderfolgenden Schrumpfvorgängen Abkühlzeiten nicht mehr erforderlich sind.

In besonders vorteilhafter Weiterbildung der Erfindung ist erfindungsgemäß vorgesehen, daß die Zuführ- und Schneideinrichtung relativ zum Gut aus ihrer Zuführposition oberhalb des Stapels in eine vor Wärmeeinflüssen weitgehend geschützte Position verschiebbar ist. Hierbei befindet sich die Zuführ- und Schneideinrichtung zumindest während des Schrumpfvorgangs in der vor Wärmeeinflüssen geschützten Position und wird erst nach Abschluß des Schrumpfvorgangs wieder in ihre Position oberhalb des zu verpackenden Guts verbracht, wodurch eine übermäßige Erwärmung der Zuführ- und Schneideinrichtung und somit des noch nicht auf das zu verpackende Gut aufgezogenen Folienschlauchs mit Sicherheit vermieden wird.

Zweckmäßigerweise ist gemäß einer weiteren Ausgestaltung der Erfindung die Zuführ- und Schneideinrichtung aus ihrer Zuführposition insbesondere in horizontaler Richtung zum Vorratswickel hin verschiebbar. Insbesondere bei dieser bevorzugten Ausgestaltung ist weiterhin vorgesehen, daß in der Zuführbahn der Kunststoffolie zwischen Zuführ- und Schneideinrichtung und Vorratswickel eine Puffereinrichtung zum Längenausgleich der Zuführbahn zwischen Zuführ- und Schneideinrichtung und Vorratswickel bei unterschiedlichen Positionen der Zuführ- und Schneideinrichtung vorgesehen ist. Diese Puffereinrichtung kann in besonders einfacher Weise von mindestens einer beweglichen Umlenkrolle für die Kunststoffbahn gebildet sein.

Gemäß einer weiteren, besonders bevorzugten Ausführungsform der Erfindung ist eine Gebläseeinrichtung vorgesehen, die einen von der Zuführ- und Schneideinrichtung weg, insbesondere im wesentlichen senkrecht nach unten gerichteten Luftstrom erzeugt. Dieser von der Zuführ- und Schneideinrichtung weg gerichtete Luftstrom verhindert, daß nach oben aufsteigende Warmluft in nennenswertem Maße an die Zuführ- und Schneideinrichtung gelangt und diese erwärmt.

Zweckmäßigerweise ist die Gebläseeinrichtung an der Zuführ- und Schneidstation angeordnet und die Austrittsöffnungen der Gebläseeinrichtung sind vorzugsweise beidseitig der Austrittsöffnungen der Zuführ- und Schneideinrichtung für die Kunststofffolie angeordnet.

Gemäß einem weiteren, besonders bevorzugten Ausführungsbeispiel der Erfindung ist vorgesehen, daß die aus dem Schrumpfrahmen austretende Heißluft zumindest teilweise wieder in den Schrumpfrahmen zurückführbar ist. Im Falle dieses Ausführungsbeispiels wird somit während des Schrumpfvorgangs ein stetiges Umwälzen der Heizluft erzielt, wodurch zumindest ein beachtlicher Teil der Heißluft an einem Aufsteigen bis zu der Zuführ- und Schneideinrichtung gehindert wird. Gleichzeitig ergibt sich durch das Umwälzen der Heißluft eine deutliche Energieeinsparung.

In zweckmäßiger Weiterbildung der Erfindung kann der Schrumpfrahmen als im wesentlichen allseitig geschlossenes Hohlprofil ausgebildet sein, wobei die aus dem Schrumpfrahmen austretende Luft an dessen unterem Bereich austritt, wobei im oberen Bereich der innenliegenden Seite des Schrumpfrahmens Eintrittsöffnungen für die aufsteigende Heißluft ausgebildet sind, und wobei im Inneren des Schrumpfrahmens Mittel wie Sauggebläse oder Ventilatoren angeordnet sind, um durch die Eintrittsöffnungen Heißluft anzusaugen.

Insbesondere bei der Verwendung von wärmeempfindlichem Verpackungsgut wird es sich als vorteilhaft erweisen, wenn der Brenner des Schrumpfrahmens nicht direkt an der Austrittsöffnung des Gehäuses des Schrumpfrahmens angeordnet ist, nachdem dann insbesondere auch vermieden wird, daß Flammen aus dem Gehäuse austreten, was zum einen zur Beschädigung der Schrumpffolie führen könnte und zum anderen vom Benutzer selbst dann nicht akzeptiert wird, wenn hiermit keine technischen Nachteile verbunden sind.

Es ist bekannt, den Brenner der Vorrichtung innerhalb des Gehäuses in einer von der Austrittsöffnung entfernten Position anzuordnen. Hierdurch wird vermieden, daß Flammen aus der Austrittsöffnung austreten, und aufgrund des langen Weges der mittels des Brenners erhitzten Gase zur Austrittsöffnung ist davon auszugehen, daß innerhalb des zwischen Brenner und Austrittsöffnung definierten Strömungskanals eine gewisse Vermischung der erhitzten Gase mit der Kühlluft auftritt, so daß die Temperatur der aus der Austrittsöffnung austretenden erhitzten Gase bezüglich der ursprünglichen Temperatur der erhitzten Gase bereits reduziert ist. Allerdings ergibt sich aufgrund des relativ lang ausgebildeten Strömungskanals eine entsprechend große Dimensionierung des den Strömungskanal aufnehmenden oder definierenden Gehäuses.

Zur Verbesserung der Durchmischung der mittels des Brenners erhitzten Gase mit der Kühlluft bei gleichzeitigem Kleinhalten der Abmessungen des Gehäuses ist daher gemäß einem weiteren Aspekt der Erfindung vorgesehen, daß der Strömungskanal zwischen Brenner und Austrittsöffnung um mindestens 180° umgelenkt ist.

Aufgrund dieser Lösung ist somit eine Faltung des Strömungskanals möglich, so daß trotz langem Strömungskanal die Abmessungen des Gehäuses in Austrittsrichtung der erhitzten Gase reduziert werden können. Weiterhin wird aufgrund der Umlenkung des Strömungskanals um insgesamt mindestens 180° im Umlenkungsbereich bzw. in den Umlenkungsbereichen eine Verwirbelung der erhitzten Gase mit deren Kühlluft erreicht, so daß die aus der Austrittsöffnung austretenden Gase ein besonders gleichmäßiges Temperaturprofil aufweisen.

In bevorzugter Weiterbildung der Erfindung sind mehrere Umlenkungen des Strömungskanals vorgesehen, wobei der jeweilige Umlenksinn benachbarter Umlenkungen jeweils entgegengesetzt ist. Hierdurch ergibt sich eine besonders gute Durchmischung der erhitzten Gase und der Kühlluft, und andererseits ermöglicht dies eine besonders vorteilhafte Faltung des Strömungskanals, die zum einem sehr kompakton Aufbau des Gehäuses führt.

In bevorzugter Weise ist vorgesehen, daß eine der Umlenkungen des Strömungskanals etwa 180° beträgt. Insbesondere kann die in Strömungsrichtung der erhitzten Gase gesehen erste Umlenkung etwa 90° und die zweite Umlenkung etwa 180° betragen. Hieran kann sich eine dritte Umlenkung anschließen, die die Ausströmrichtung der erhitzten Gase, vorzugsweise zur Horizontalen geneigt, definiert.

Im einzelnen kann die Vorrichtung in zweckmäßiger Weise dadurch weitergebildet werden, daß das Gehäuse zumindest im Bereich des Strömungskanals im Querschnitt im wesentlichen winkelförmig ausgebildet ist, daß im einen Schenkel des Winkels die Brenneröffnung angeordnet ist und die Ausströmrichtung der den Brenner verlassenden erhitzten Gase mit der Richtung dieses Schenkels im wesentlichen übereinstimmt, daß im anderen Schenkel des Winkels eine Umlenkplatte angeordnet ist, die vom Ende dieses Schenkels beabstandet ist und an der diesem Ende gegenüberliegenden Gehäusewandung dichtend anschließt, und daß die Austrittsöffnung im Bereich der der Umlenkplatte gegenüberliegenden äußeren Gehäusewandung des weiteren Schenkels bzw. der sich hieran in Richtung zur Umlenkplatte hin anschließenden äußeren Gehäusewandung des einen Schenkels angeordnet ist. Hierdurch ist ein besonders kompakter Aufbau des Gehäuses möglich.

Die von den erhitzten Gasen als erstes angeströmte Wand, nämlich die Umlenkplatte, ist im Inneren des Gehäuses gelegen, so daß die Außenwandungen des Gehäuses nur in geringerem Umfang erhitzt werden.

Insbesondere dann, wenn aus den eingangs geschilderten Gründen der Brenner vollständig innerhalb des Gehäuses angeordnet ist, kann es zu starken Erhitzungen der Außenwände des Gehäuses kommen, was möglichst vermieden werden soll. Im Falle des bekannten Standes der Technik sind zu diesem Zweck in relativ aufwendiger Weise entlang dem Strömungskanal zusätzliche Kühlluftdüsen vorgesehen. Demgegenüber wird im Falle der vorliegenden Erfindung vorgeschlagen, daß der Strömungskanal zumindest teilweise mit einem hitzedämmenden Material ausgekleidet ist, wobei dieses hitzedämmende Material beispielsweise Asbest oder ein gleichwertiges Material sein kann. Insbesondere dann, wenn die weiter oben erläuterte Anordnung der vollständig innerhalb des Gehäuses angeordneten, dem Brenner gegenüberliegenden Umlenkplatte vorgesehen ist und gleichzeitig der Kanal mit hitzedämmendem Material ausgelegt ist, hat sich gezeigt, daß sich die Außenwandungen des Gehäuses im Betrieb nur schwach erwärmen.

Weitere bevorzugte Merkmale der Erfindung ergeben sich aus den übrigen Unteransprüchen im Zusammenhang mit der nachfolgenden Beschreibung, in der mehrere Ausführungsbeispiele der Erfindung näher erläutert sind. In der Zeichnung zeigen in halbschematischer Darstellung:

Fig. 1     eine teilweise geschnittene Seitenansicht der erfindungsgemäßen Verpackungsvorrichtung,

Fig. 2     eine teilweise geschnittene Ansicht von vorne auf die Verpackungsvorrichtung gemäß Fig. 1,

Fig. 3     eine Draufsicht auf die Verpackungsvorrichtung gemäß Fig. 1,

Fig. 4     eine schematische Ansicht von oben, welche den Vorgang des vorläufigen Aufweitens des Folienschlauches mittels an den Unterdruck-Saugeinrichtungen befestigten Greifern zeigt,

Fig. 5     verschiedene Ansichten des Greifers gemäß Fig. 4,

Fig. 6     eine Seitenansicht eines weiteren Ausführungsbeispiels einer erfindungsgemäßen Vorrichtung mit verschieblicher Zuführ- und Schneideinrichtung,

Fig. 7     eine Seitenansicht eines weiteren Ausführungsbeispiels einer erfindungsgemäßen Vorrichtung mit einer Gebläseeinrichtung,

Fig. 8     eine geschnittene Seitenansicht eines Schrumpfrahmens eines weiteren Ausführungsbeispiels einer erfindungsgemäßen Vorrichtung, bei der die erzeugte Heißluft umgewälzt wird, und

Fig. 9     einen Querschnitt durch den Schrumpfrahmen eines weiteren Ausführungsbeispiels.

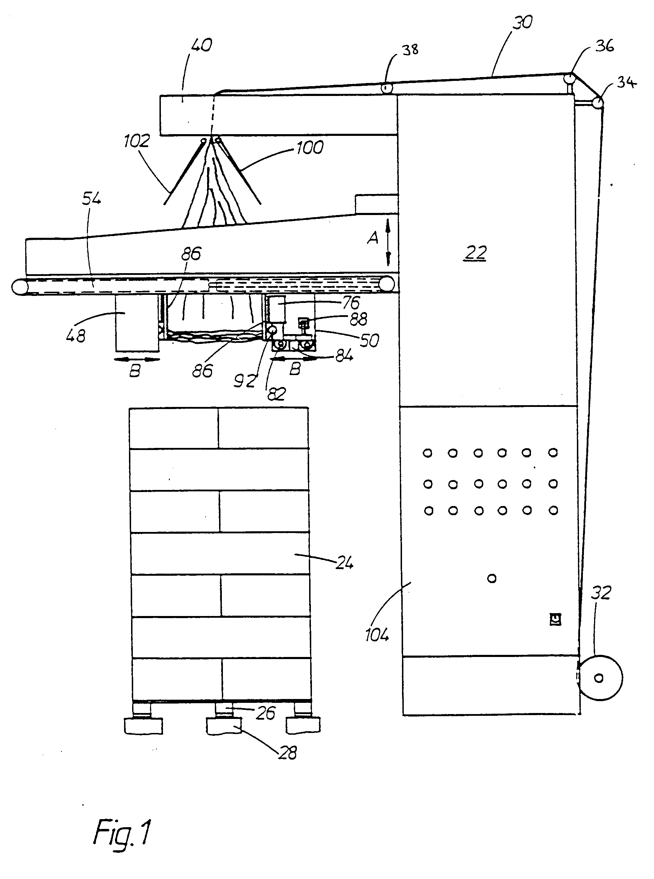

Die in den Fig. 1 bis 5 dargestellte Verpackungsvorrichtung umfaßt einen horizontal angeordneten, rechteckförmigen Rahmen 10 mit jeweils parallelen Rahmenteilen 12 und 14 bzw. 16 und 18, welche eine Rahmenöffnung 20 definieren. Der Rahmen 10 ist an einem Ständer 22 in vertikaler Richtung beweglich gelagert, wie dies durch den Doppelpfeil A angedeutet ist. Unterhalb der Rahmenöffnung 20 ist das zu verpackende, stapelförmige Verpackungsgut 24 angeordnet, welches auf einer Palette 26 abgesetzt ist. Die Palette 26 wird gemeinsam mit dem Verpackungsgut 24 verpackt. Das Verpackungsgut 24 ist mittels einer Transporteinrichtung 28 in die Verpackungsposition unterhalb der Rahmenöffnung 20 positionierbar und wird nach vollzogener Verpackung über diese Transporteinrichtung 28 weiterbefördert.

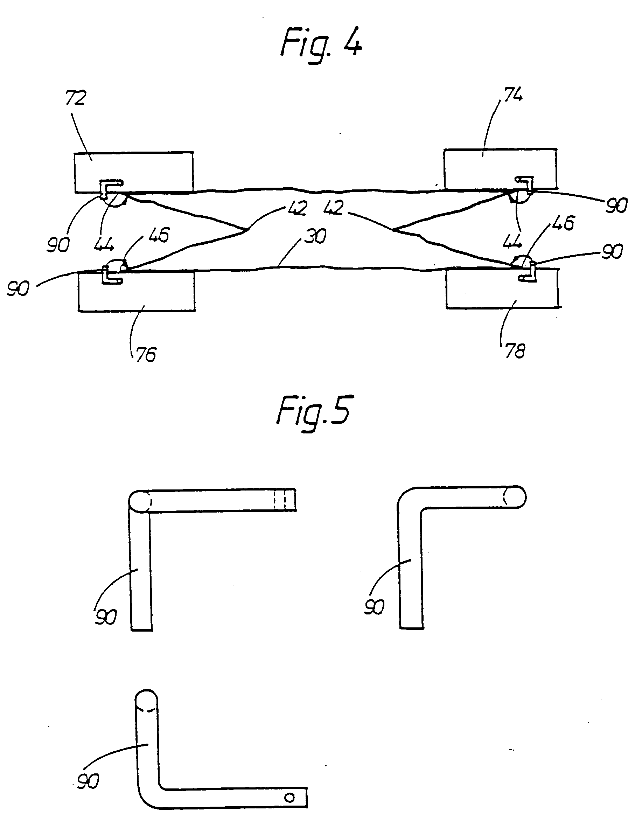

Als Verpackungsmaterial dient eine Schlauchfolie 30, die auf einer Vorratsrolle 32 aufgewickelt ist und über Umlenkelemente 34, 36, 38 wie Gleitschienen und Walzen einer am oberen Ende des Ständers 22 befestigten, horizontalen, in gleicher Richtung wie der Rahmen 10 nach vorne herausragenden Konsole 40 zugeführt wird. Die Schlauchfolie 30 besteht aus Polyäthylen und weist eine Dikke zwischen 80 μ und 150 μ auf. Die Schlauchfolie 30 ist in ihrem zusammengelegten Zustand derart gefaltet, daß sie an jeder Seite einen Doppelfalz besitzt, d. h. an jeder Seite einen nach innen umgelegten Rand 42 und zwei nach außen weisende Kanten 44, 46, wie dies insbesondere aus Fig. 4 ersichtlich ist.

Innerhalb der Konsole 40 sind neben geeigneten, nicht näher dargestellten Führungseinrichtungen ebenfalls nicht dargestellte Einrichtungen zum Abschneiden und ggf.Zusammenschweißen des Schlauches in Querrichtung vorgesehen.

Am Rahmen 10 sind zwei zueinander und zu den Rahmenteilen 12, 14 parallele Konsolen 48, 50 angeordnet, welche an längs der Rahmenteile 16, 18 angeordneter Führungen 52 mittels geeigneter Steuerzylinder 54 bewegbar sind. Die beiden Konsolen 48, 50 können demnach aufeinanderzu und voneinanderweg bewegt werden, wie dies in Fig. 1 durch die Doppelpfeile B angedeutet ist. Über eine aus Zahnrädern 56 bis 62, die Zahnräder 56 und 58 einerseits und 60 und 62 andererseits verbindende Ketten 64 bzw. 66 und eine parallel zum Rahmenteil 12 an der Vorderseite des Rahmens 10 über Lager 68 gelagerte, die Zahnräder 58 und 60 miteinander koppelnde Welle 70 bestehende Synchronisierungseinheit werden die beiden Konsolen 48, 50 synchron verfahren.

Jede der Konsolen trägt zwei Saugkästen 72, 74 bzw. 76, 78, die ein nicht näher dargestelltes Sauggebläse beinhalten. Die Saugkästen 72, 74 bzw. 76, 78 sind über Führungen 80, 82 jeweils in Längsrichtung der zugeordneten Konsole 48 oder 50 verschieblich gelagert, wobei die Saugkästen mittels Zylindereinheiten 84 bewegt werden, vgl. Fig. 1. Die Saugkästen 72 und 74 bzw. 76 und 78 können somit jeweils aufeinanderzu bzw. voneinanderweg bewegt werden, wobei die Bewegung sämtlicher Saugkästen 72 bis 78 vorzugsweise synchron erfolgt. Die Saugkästen 72 bis 78 weisen jeweils eine vertikale Ansaugöffnung auf, die zum Inneren der Rahmenöffnung 20 hin weist.

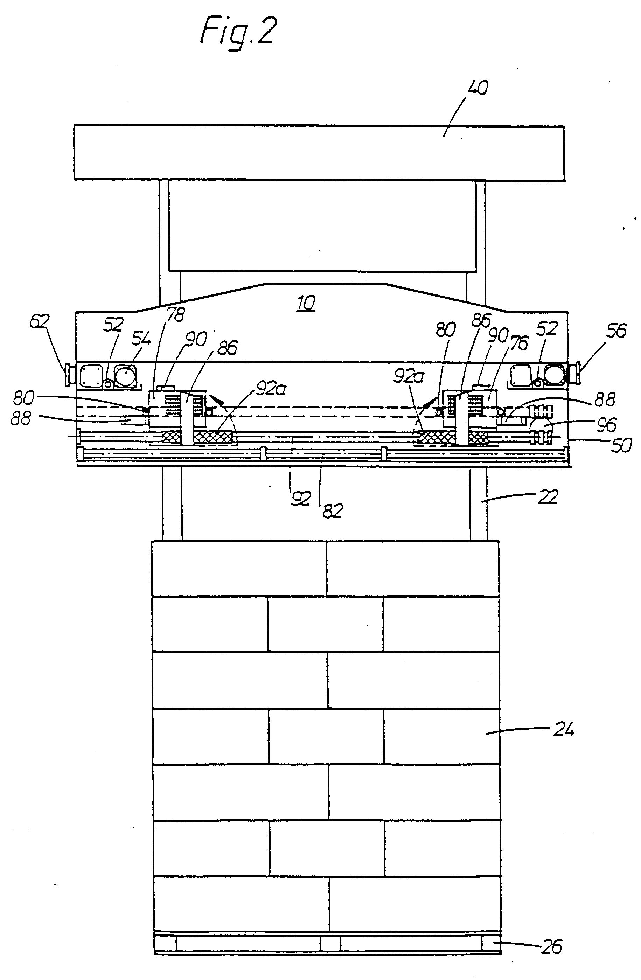

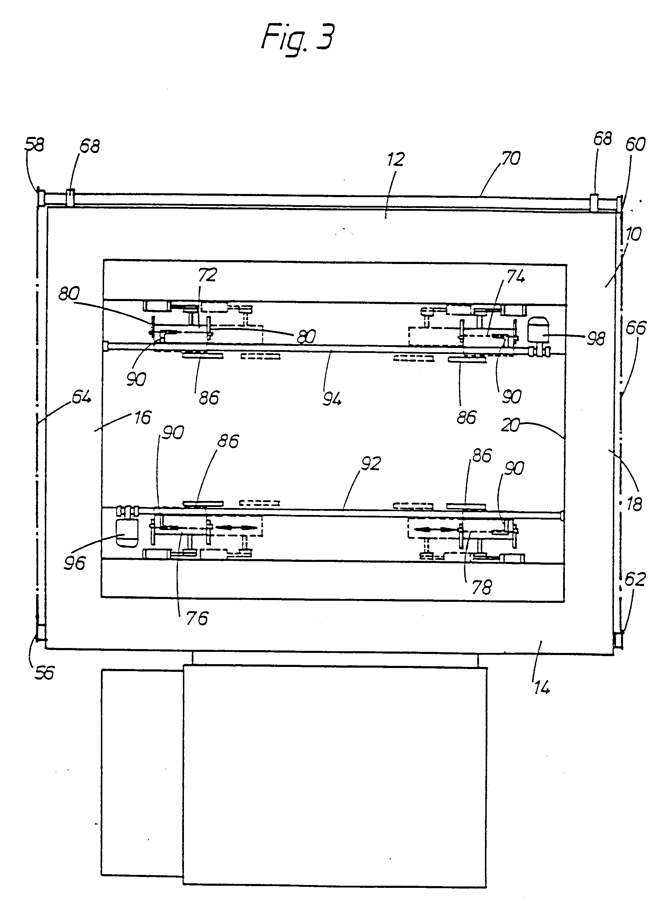

An jedem der Saugkästen 72 bis 78 ist ein verschwenkbares Fingerelement 86 gelagert, welches, wie sich insbesondere aus Fig. 3 im Zusammenhang mit Fig. 2 ergibt, aus einer horizontalen, parallel zu den Rahmenteilen 12 und 14 verlaufenden, mit dem freien Ende zum Inneren der Rahmenöffnung 20 hinweisenden Nichtgebrauchsstellung (Fig. 3) in eine vertikal nach oben gerichtete Funktionsstellung (Fig. 1 und 2) verschwenkbar ist. Zur Betätigung eines jeden Fingerelements 86 ist jeweils ein Betätigungszylinder 88 vorgesehen. Jedes Fingerelement 86 ist in einer Ebene, die von der Saugöffnung des zugehörigen Saugkastens geringfügig beabstandet ist, angeordnet und befindet sich in seiner horizontalen Position unterhalb des Saugkastens und in seiner vertikalen Funktionsstellung dem jeweiligen Saugkasten gegenüberliegend.

Auf der Oberseite eines jeden Saugkastens 72 bis 78 ist weiterhin jeweils ein um eine vertikale Achse verschwenkbarer, doppelt rechtwinklig abgeknickter Greifer 90 angeordnet, dessen Aufbau sich insbesondere aus den Fig. 4 und 5 ergibt. Diese Greifer 90 sind aus einer seitlichen Ruhestellung in Pfeilrichtung gemäß Fig. 4 in eine Klemmstellung verschwenkbar, in der sie die äußeren Kanten 44, 46 der Schlauchfolie 30 am jeweils zugeordneten Saugkasten festklemmen.

In jeder Konsole 48, 50 ist eine horizontal angeordnete, in Längsrichtung der Konsole verlaufende Welle 92 bzw. 94 angeordnet, die jeweils mittels eines Motors 96, 98 antreibbar ist. Jede Welle 92, 94 verläuft knapp unterhalb der ihr zugeordneten Saugkästen und ist den zugeordneten Fingerelementen 86 gegenüberliegend. Im Bereich der Saugkästen bzw. der Fingerelemente ist jede Welle 92, 94 mit einer Friktionsschicht 92a, 94a umgeben. Weiterhin ist jede Welle 92, 94 derart federnd gelagert, daß sie insbesondere in horizontaler Richtung nach außen, d. h. von der Rahmenöffnung 20 weggerichtet, ausweichen kann. Zusätzlich sind die Wellen 92, 94 derart federgelagert, daß sie in vertikaler Richtung nach oben ausweichen können, um eine erhöhte Materialaufnahme auf den Fingerelementen 86 zu ermöglichen.

Der Rahmen 10 selbst ist als Schrumpfrahmen ausgebildet, wozu innerhalb des Rahmens 10 geeignete Gasbrenner angeordnet sind, die kurzfristig aktivierbar sind, so daß bei Aktivierung der Gasbrenner das im Bereich der Rahmenöffnung befindliche Folienmaterial aufgrund Hitzeeinwirkung schrumpft.

Am Folienauslaßbereich der oberen Konsole 40 sind verschwenkbare Zentrierflügel 100, 102 angeordnet, die bewirken, daß die dem Rahmen 10 zuzuführende Schlauchfolie mittig zugeführt wird. Hierzu werden die beiden Zentrierflügel so nahe zusammengeführt, daß zwischen diesen nur noch ein Schlitz besteht, durch den die Schlauchfolie nach unten geführt wird. Beim Heißschrumpfen werden diese Zentrierflügel 100, 102 zusammengeklappt, derart, daß sie eine keilförmige Konfiguration einnehmen und ggf. nach oben steigende Wärme seitwärts leiten.

Die vorstehend beschriebene Vorrichtung arbeitet vollautomatisch. Mit der Bezugsziffer 104 ist ein am Ständer 22 angeordnetes Steuerpult mit Programmsteuerung bezeichnet.

Die im Zusammenhang mit den Fig. 1 bis 5 beschriebene Vorrichtung arbeitet wie folgt:
Bei Betriebsbeginn befindet sich der Rahmen 10 in seiner oberen Stellung, beispielsweise der in den Fig. 1 und 2 dargestellten Lage oberhalb des Verpackungsguts 24. Schlauchfolie 30 wird über die Konsole 40 der Rahmenöffnung 20 zugeführt, bis der untere Rand der Schlauchfolie 30 in etwa mit der Ebene der Wellen 92, 94 bündig ist. In dieser Position sind die beiden Konsolen 40, 42 ausreichend voneinander beabstandet, um ein ungehindertes Dazwischentreten der Schlauchfolie zu gewährleisten.

Anschließend werden die Saugkästen, deren Gebläse bereits auf volle Touren gebracht worden sind, wobei allerdings die Saugseite noch blockiert ist, aufeinander zugeführt. Dies geschieht durch gegenseitiges Annähern der Konsolen 48, 50, wobei bei Bedarf gleichzeitig die Saugkästen in Querrichtung in die erforderliche Position verschoben werden können. Sobald die Saugkästen bis an die Schlauchfolie herangeführt worden sind, wird über eine pneumatische Steuerung die Saugseite geöffnet, so daß an den Öffnungen der Saugkästen plötzlich ein Unterdruck entsteht und die Schlauchfolie sofort angesaugt wird.

Nachdem die Sauggebläse durch Auseinanderfahren der Konsolen 48, 50 geringfügig voneinander entfernt worden sind und daher die an den Saugkästen haftende Schlauchfolie geringfügig entfaltet worden ist, werden die Greifer 90 aktiviert, so daß diese in Richtung der Pfeile gemäß Fig. 4 schwenken und hierdurch die Bereiche der Kanten 44, 46 an den Saugkästen festklemmen. Die Konsolen fahren mit ihrer nach außen gerichteten Bewegung fort, bis der Folienquerschnitt soweit geöffnet ist, daß die Fingerelemente 86 sicher in das Innere der Schlauchfolie einschwenken können. Dieses Einschwenken der Fingerelemente in das Innere der Schlauchfolie kann gleichzeitig mit dem Zurückschwenken der Greifer 90 in ihre Ruheposition erfolgen.

Anschließend werden die Fingerelemente durch entsprechende Bewegungen der Konsolen und/oder der Saugkästen soweit nach außen gefahren, bis die Schlauchfolie 30 vollständig geöffnet ist. Anschließend wird weiteres Schlauchfolienmaterial von oben zugeführt, wobei sich dieses Schlauchfolienmaterial auf die Außenseiten der Fingerelemente aufsetzt. Gleichzeitig werden die Wellen 92, 94 in Drehung versetzt, so daß die Schlauchfolie auf die Fingerelemente aufgeschoben wird und hier im gerafften Zustand gehalten wird.

Nachdem die erforderliche Länge an Schlauchfolienmaterial auf die Fingerelemente 86 aufgebracht worden ist, werden die Fingerelemente 86 durch geeignetes Verfahren der Konsolen 48, 50 und/oder der Saugkästen 72 bis 78 nach außen verfahren, wobei die auf die Finger aufgeraffte Folie um etwa 30% gedehnt wird, bis der Folienquerschnitt etwas größer ist als der Querschnitt des zu verpackenden Gegenstandes. Anschließend wird der Rahmen 10 nach unten verfahren, wobei gleichzeitig das obere Ende des verwendeten Schlauchfolienabschnitts in geeigneter Weise festgehalten wird. Diese Lagefixierung des oberen Schlauchfolienendes kann entweder durch geeignetes Festklemmen im Bereich der oberen Konsole 40 erfolgen, oder aber dadurch, daß im Bereich der oberen Konsole 40 das obere Ende des Schlauchfolienabschnitts verschweißt wird, so daß sich der nunmehr haubenartig geschlossene Schlauchfolienabschnitt beim Überziehen auf den zu verpackenden Stapel auf die Oberseite des Stapels auflegt. In alternativer Weise kann auch auf das Zuschweißen des oberen Endes des Folienschlauchabschnittes verzichtet werden, nachdem das Folienmaterial ohnehin stark gedehnt ist und sich an dem zu verpakkenden Gut durch Materialschrumpfung fest anlegt.

Wird der Rahmen 10 nach unten gezogen, so wird die Schlauchfolie über das zu verpackende Gut gezogen. Sie legt sich an die Oberfläche des zu verpackenden Gutes an und wird im gleichen Maße, wie der Rahmen nach unten verfahren wird, von den Fingerelementen 86 heruntergezogen. Hierbei ist zu beachten, daß die Folie in gerafftem Zustand auf den Fingerelementen angeordnet ist, wobei die mit der Friktionsbeschichtung (Gummi) versehenen Wellen die Schlauchfolie belasten. Diese Wellen drehen sich nunmehr in entgegengesetzter Richtung oder aber sie geben die Schlauchfolie schrittweise frei, indem sie seitlich wegfedern. Auf diese Weise wird jedenfalls sichergestellt, daß die Folie in gestrafftem Zustand von den Fingerelementen abgezogen wird.

Sobald der Rahmen 10 seine unterste Position erreicht hat, werden die Fingerelemente selbsttätig nach unten aus der Schlauchfolie herausgezogen und der Rahmen kann wieder nach oben in seine Ausgangsposition zur Durchführung eines neuen Arbeitszyklus fahren.

Die oberen und unteren Enden der Schlauchfolie, die über das zu verpackende Gut hinausragen, werden zusätzlich durch Heißschrumpfung behandelt. Hierzu werden die im Rahmen 10 befindlichen Gasbrenner beim Aufwärtsfahren des Rahmens kurzfristig gezielt aktiviert, um eine Schrumpfung des an der Unterseite und/oder der Oberseite des zu verpackenden Gegenstandes befindlichen Material zu bewirken.

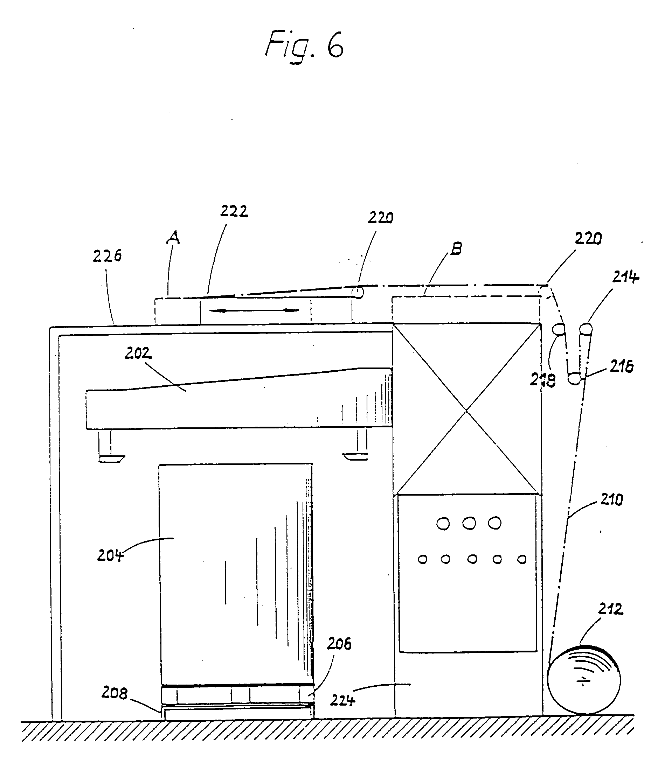

Im folgenden wird auf das Ausführungsbeispiel gemäß Fig. 6 Bezug genommen. Die Vorrichtung umfaßt einen horizontal angeordneten, rechteckförmigen Schrumpfrahmen 202, der eine innenliegende Rahmenöffnung definiert, deren Ausmaße etwas größer sind als die Außenabmessungen des mit Schrumpffolie zu verpackenden, stapelförmigen Verpackungsguts 204. Das Verpackungsgut 204 ist auf einer Palette 206 abgesetzt, die gemeinsam mit dem Verpackungsgut 204 verpackt wird. Das Verpackungsgut 204 ist mittels einer Transporteinrichtung 208 in die Verpackungsposition unterhalb der Öffnung des Schrumpfrahmens 202 positionierbar und wird nach vollzogener Verpackung über die Transporteinrichtung 208 weiterbefördert.

Als Verpackungsmaterial dient eine Schlauchfolie 210, die auf einem Vorratswickel 212 aufgewickelt ist und über Führungsrollen 214 bis 220 einer Zuführ- und Schneideinrichtung 222 zugeführt wird. Die Zuführ- und Schneideinrichtung 222 ist aus ihrer in Fig. 6 gestrichelt dargestellten Betriebsstellung A, in der sie sich oberhalb des Verpackungsguts 204 und oberhalb des Schrumpfrahmens 202 befindet, mittels einer nicht näher dargestellten Führungsschieneneinrichtung und eines ebenfalls nicht näher dargestellten Antriebsmechanismus in der Darstellung gemäß Fig. 6 nach rechts in eine Warteposition B verschiebbar, in der sie sich oberhalb eines Ständers 224 befindet, an dem der Schrumpfrahmen 202 in vertikaler Richtung bewegbar getragen ist.

Die nicht näher dargestellte Führungseinrichtung für die Zuführ- und Schneideinrichtung 222 ist von einem in Seitenansicht L-förmigen Rahmen 226 getragen, dessen horizontaler Schenkel die Schrumpfrahmenanordnung 202 überspannt, mit seinem freien Ende am Ständer 224 befestigt ist und dessen vertikaler Schenkel am Boden abgestützt ist. Die Zuführ-und Schneideinrichtung 222 umfaßt in üblicher Weise neben einem antreibbaren, nicht näher dargestellten Einzugswalzenpaar Schneidmittel zum Ablängen der gewünschten Schlauchfolienstücke sowie gegebenenfalls eine Schweißeinrichtung, mit der das obere Ende eines jeden abgelängten Schlauchfolienstücks mit seiner Schweißnaht verschlossen wird. An der Unterseite der Zuführ- und Schneideinrichtung ist eine Austrittsöffnung für die Schlauchfolie vorgesehen.

Bei Beginn eines jeden Betriebszyklus befindet sich die Zuführ- und Schneideinrichtung 222 in ihrer Betriebsstellung A oberhalb des Verpackungsguts 204. Der Schrumpfrahmen 202 befindet sich in der in Fig. 6 dargestellten oberen Ausgangslage. Mittels einer geeigneten, nicht näher dargestellten, am Schrumpfrahmen 202 gelagerten Greifeinrichtung wird das freie untere Ende des aus der Zuführ- und Schneideinrichtung austretenden Folienschlauchs gegriffen, gedehnt und durch Abwärtsbewegen des Schrumpfrahmens 202 über das stapelförmige Verpackungsgut 204 gezogen. Sobald die Zuführ-und Schneideinrichtung 222 das zur Verpackung des Verpackungsguts 204 erforderliche Schlauchfolienstück abgelängt hat und das obere Ende dieses Schlauchfolienstücks gegebenenfalls verschweißt hat, wird die Zuführ- und Schneideinrichtung 222 in der Darstellung gemäß Fig. 6 nach rechts in die Warteposition B verfahren, in der sie sich oberhalb des seitlich des Schrumpfrahmens 202 angeordneten Ständers 224 befindet.

Die horizontale Achse der Führungsrolle 216 ist im wesentlichen in vertikaler Richtung beweglich gelagert. Wird die Zuführ- und Schneideinrichtung 222 in der Darstellung gemäß Fig. 6 nach rechts bewegt, so wird die hierdurch freiwerdende Länge der Schlauchfolie 210 durch Absenken der sich zwischen den Führungsrollen 214 und 218 befindlichen Führungsrolle 216 gepuffert. Bewegt sich die Zuführ- und Schneideinrichtung 222 wieder nach links, wobei sie die Schlauchfolie 210 hinter sich herzieht, so wird die beweglich gelagerte Führungsrolle 216 entgegen der Schwerkraft angehoben.

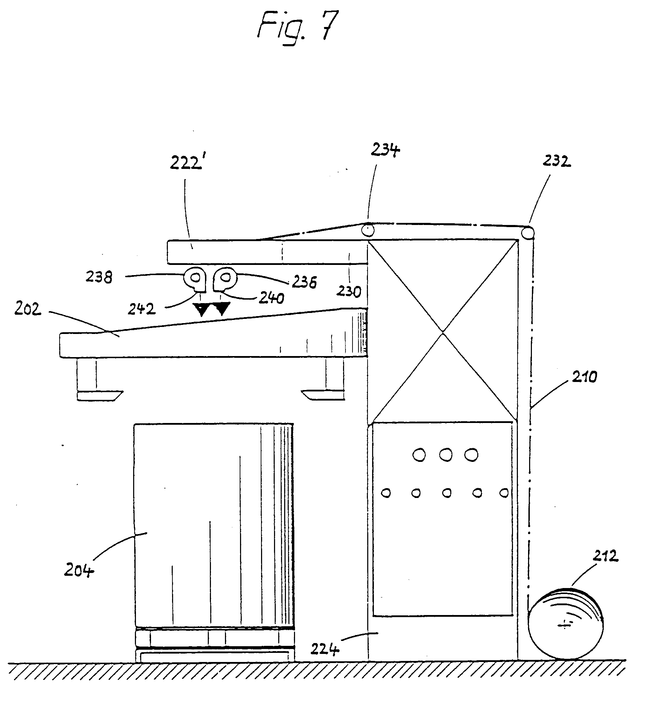

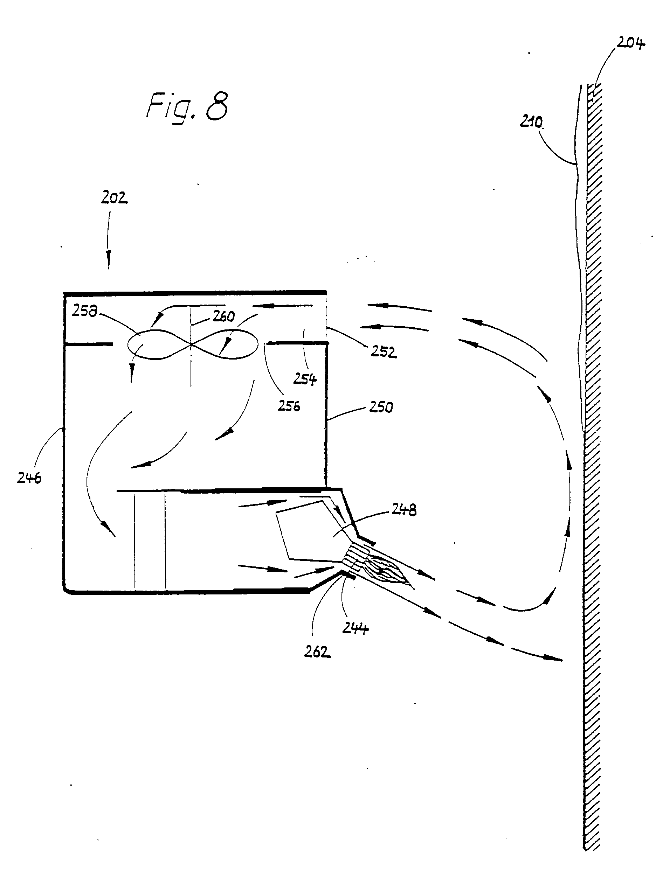

Der grundsätzliche Aufbau des Ausführungsbeispiels gemäß Fig. 7 entspricht im wesentlichen demjenigen gemäß Fig. 6, so daß für gleiche Teile die gleichen Bezugsziffern verwendet werden. Im Falle des Ausführungsbeispiels gemäß Fig. 8 ist die Zuführ- und Schneideinrichtung 222' ortsfest in einer Konsole 230 angeordnet, die am oberen Ende des Ständers 224 befestigt ist und sich in horizontaler Richtung parallel zum Schrumpfrahmen 202 erstreckt. Nachdem die Zuführ- und Schneideinrichtung 222' ortsfest angeordnet ist, kann auf die bewegliche Führungsrolle 216 gemäß Fig. 6 verzichtet werden. Die Schlauchfolie 210 wird vielmehr über Führungsrollen 232, 234 der Zuführ- und Schneideinrichtung 222' zugeführt.

An der Unterseite der Konsole 230 bzw. der Zuführ- und Schneideinrichtung 222' ist eine Gebläseeinrichtung angeordnet, die im Falle des hier beschriebenen Ausführungsbeispiels zwei Gebläse 236, 238 umfaßt, die je eine nach unten gerichtete, horizontal verlaufende, sich im wesentlichen über die gesamte Breite der Zuführ- und Schneideinrichtung 222' erstreckende spaltförmige Ausgangsdüse 240 bzw. 242 aufweisen, wodurch ein im wesentlichen senkrecht nach unten weisender Luftstrom erzeugbar ist. Die Gebläse 236, 238 werden im wesentlichen gleichzeitig mit dem Folienvorschub aktiviert und bleiben zumindest solange eingeschaltet, bis der Schrumpfvorgang abgeschlossen ist. Der nach unten gerichtete Luftstrom der Gebläse 236, 238 drückt den beim Schrumpfen entstehenden Warmluftstrom nach unten und zur Seite, wodurch die Erwärmung der Zuführ- und Schneideinrichtung 222' durch aufsteigende, erhitzte Luft wesentlich reduziert werden kann.

Fig. 8 zeigt einen Schnitt durch einen Schenkel des insgesamt als Hohlprofil ausgebildeten Schrumpfrahmens gemäß einem weiteren bevorzugten Ausführungsbeispiel der Erfindung. Als Heizelemente sind in diesem Fall eine Vielzahl von Gasbrennern 244 vorgesehen, die im unteren inneren Bereich des Hohlprofils 246 eines jeden Schenkels des Schrumpfrahmens 202 gleichmäßig verteilt sind und über ein Leitungssystem 248 mit Primärluft versorgt werden. Im oberen Endbereich der innenliegenden Seiten 250 des Hohlprofils 246 sind eine Vielzahl von Eintrittsöffnungen 252 ausgebildet, die gegebenenfalls für jeden Schenkel des Schrumpfrahmens 202 auch als eine einzige, durchgehende Öffnung ausgeführt sein können. Kanäle 254 verbinden die Eintrittsöffnungen 252 mit horizontal ausgerichteten Öffnungen 256, in denen Ventilatoren 258 um eine vertikale Drehachse 260 drehbar im Inneren des Schrumpfrahmens angeordnet sind. Diese Ventilatoren 258 saugen Luft durch die Eintrittsöffnungen 252 von außerhalb des Schrumpfrahmens 202 in das Innere des Hohlprofils 246, von wo diese Sekundärluft zwischen den Gasbrennern 244 und diese umgebenden Wandungsteilen 262 nach außen aus dem Hohlprofil 246 in Richtung zum Verpackungsgut 204 bzw. der hierauf aufgezogenen Schlauchfolie 210 ausströmt.

Wie aus der Darstellung gemäß Fig. 8 deutlich ersichtlich, wird zumindest ein Teil der über die Gasbrenner 244 erwärmten Luft im Kreislauf durch den Schrumpfrahmen geführt, wodurch zum einen der Wirkungsgrad der Heizeinrichtung verbessert wird und zum anderen zumindest ein Teil der erhitzten Luft am Aufsteigen in Richtung Zuführ- und Schneideinrichtung gehindert wird. Hierdurch kann die Erwärmung der oberhalb des Schrumpfrahmens 202 angeordneten Zuführ- und Schneideinrichtung zumindest auf ein solches Maß reduziert werden, daß hierdurch die Leistungsfähigkeit der Anlage nicht reduziert wird, d.h. Warte- bzw. Stillstandszeiten zum Zwecke des Abkühlens der Zuführ- und Schneideinrichtung nicht erforderlich sind.

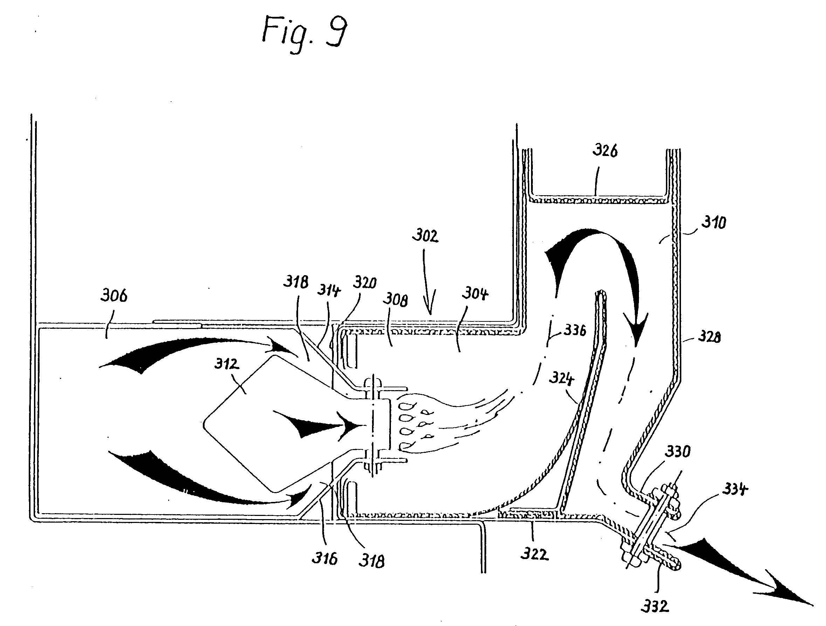

Im Falle des Ausführungsbeispiels gemäß Fig. 9 ist das Gehäuse 302 eines Schrumpfrahmens bzw. des einen Schenkels eines Schrumpfrahmens im Querschnitt winkelförmig ausgebildet und umfaßt einen horizontalen Schenkel 304 und einen hieran zur Schrumpfrahmenöffnung hin anschließenden vertikalen Schenkelabschnitt 310. Der horizontale Schenkel 304 des Gehäuses 302 ist in einen äußeren Schenkelabschnitt 306, der die Kühlluftkammer definiert, und einen innenliegenden horizontalen Schenkelabschnitt 308 unterteilt. Ein als Gasbrenner ausgebildeter Brenner 312 ist im horizontalen Schenkel 304 derart angeordnet, daß er mit seinem rückwärtigen Bereich in der Kühlluftkammer 306 liegt, während er mit seinem vorderen, die Ausströmöffnung umfassenden Bereich im horizontalen Schenkelabschnitt 308 liegt. Die Ausströmrichtung des Gasbrenners 312 liegt ebenfalls horizontal. Gekröpfte Leitbleche 314, 316 sind mit ihren hinteren Abschnitten an der oberen bzw. unteren Wand der Kühlluftkammer 306 befestigt, gegenüberliegend angeordnet und verjüngen sich in Strömungsrichtung gesehen nach vorne, so daß zwischen den Leitblechen 314, 316 und dem Brenner 312 Kanäle 318 ausgebildet sind, über die Frischluft aus der Kühlluftkammer 306 in den horizontalen Schenkelabschnitt 308 zu den aus dem Brenner austretenden erhitzten Gasen geleitet wird und diese zunächst in Form eines Kühlluftmantels umgibt. Im übrigen sind die Kühlluftkammer 306 und der horizontale Schenkelabschnitt 308 des Gehäuses 302 mittels geeigneter Zwischenwände 320 voneinander gasdicht getrennt.

An der unteren Gehäusewandung 322 des horizontalen Schenkelabschnitts 308 des Gehäuses 302 ist eine Umlenkplatte 324 befestigt, die sich nach oben in den vertikalen Schenkelabschnitt 310 hinein erstreckt, jedoch mit Abstand vor dessen oberer Gehäusewandung 326 endet. Die Umlenkplatte 324 ist etwa mittig im vertikalen Schenkelabschnitt 310 angeordnet.

Die innenliegende Gehäusewandung 328 des vertikalen Schenkelabschnitts 310 ist in ihrem unteren Bereich um etwa 30° eingeknickt und anschließend in entgegengesetzter Richtung um etwa 90° abgeknickt. Entsprechend ist der innenliegende Abschnitt der unteren Gehäusewandung 322 ebenfalls um 30° abgeknickt, so daß sich die Wandungsabschnitte 330, 332 parallel gegenüberliegen und eine düsenförmige Austrittsöffnung 334 definieren, deren Austrittsrichtung um etwa 30° gegenüber der Horizontalen nach unten geneigt ist. Die innenliegenden Enden der düsenförmigen Austrittsöffnung 334 liegen in etwa in Höhe der innenliegenden Gehäusewandung 328.

Sämtliche Innenwandungen des so definierten Strömungskanals 336 sind mit einem hitzedämmenden Material 338 ausgelegt, so daß das erhitzte Gas bzw. Gas-Luft-Gemisch auf seinem Strömungsweg mit den metallischen Gehäusewandungen nicht direkt in Kontakt kommt.

Im Falle des beschriebenen Ausführungsbeispiels erfährt die Gas- bzw. Luftströmung mehrere Umlenkungen. Zunächst wird sie aus der horizontalen Richtung um 90° nach oben im Gegenuhrzeigersinn umgelenkt, anschließend im Uhrzeigersinn um 180° nach unten, anschließend um etwa 30° nochmals im Uhrzeigersinn und abschließend um etwa 90° im Gegenuhrzeigersinn, bis sie das Gehäuse über die Austrittsöffnung 334 verläßt. Es findet somit insgesamt eine Umlenkung von etwa 390° statt, so daß die erhitzten Gase und die Kühlluft aufgrund von Wirbelbildungen besonders gut durchmischt werden, wozu auch die Gegensinnigkeit der Umlenkrichtungen von aufeinanderfolgenden Umlenkungen beiträgt. Das aus der Austrittsöffnung 334 austretende, erhitzte Gas-Luft-Gemisch weist somit ein besonders gleichmäßiges Temperaturprofil auf, wobei gleichzeitig die Abmessungen der Vorrichtung kompakt gehalten werden können und eine Erwärmung der Außenwandungen des Gehäuses 302 nur in sehr geringem Umfang auftritt.

**Patentansprüche**

1.  Verfahren zum Verpacken von Gegenständen mit einer bahn- bzw. schlauchförmigen Kunststoffolie, **dadurch gekennzeichnet, daß** die Kunststofffolie um 20 - 50 % gedehnt und in gedehntem Zustand auf die ganzen Seitenflächen des Gegenstandes (24) aufgebracht wird und daß nur die oberen und/oder unteren Endbereiche der Folienverpackung nach Aufbringung der Kunststoffolie auf den Gegenstand (24) zusätzlich noch mittels Wäremeeinwirkung geschrumpft werden.

2.  Verfahren nach Anspruch 1, **dadurch gekennzeichnet, daß** die schlauchförmige Kunststoffolie (30) in einem ersten Schritt an ihrem freien Ende ergriffen und geöffnet wird, daß sie in einem zweiten Schritt gerafft wird, daß sie in einem dritten Schritt im gerafften Zustand auf den erforderlichen Querschnitt gedehnt wird und daß sie in einem vierten Schritt bei gleichzeitigem Fixieren eines der Enden der abzulängenden Kunststoffolienbahn relativ zum Gegenstand (24) im gerafften Zustand vorzugsweise von oben nach unten über den Gegenstand (24) gezogen wird.

3.  Verfahren nach Anspruch 2, **dadurch gekenn-**

zeichnet, daß die schlauchförmige Kunststoffolie (30) vor dem Überziehen über den Gegenstand (24) an dem dem freien Ende gegenüberliegenden Ende quer zusammengeschweißt wird.

4. Verfahren nach Anspruch 3, **dadurch gekennzeichnet, daß** das Öffnen der schlauchförmigen Kunststoffolie (30) durch an der Außenseite der Kunststoffolie (30) angreifende Saugwirkung erfolgt.

5. Vorrichtung zum Verpacken von Gegenständen mit einer bahnförmigen bzw. schlauchförmigen Kunststoffolie zur Durchführung des Verfahrens nach einem oder mehreren der Ansprüche 1 bis 4, **dadurch gekennzeichnet, daß** ein an einem Ständer (22) in vertikaler Richtung beweglicher, horizontaler Rahmen (10) eine Einrichtung zum Dehnen und Aufbringen der Kunststoffolie im gedehnten Zustand auf den Gegenstand und Mittel zur Heißschrumpfung trägt.

6. Vorrichtung nach Anspruch 5, **dadurch gekennzeichnet, daß** eine Zuführeinrichtung (34 bis 40) zum Zuführen von Kunststoffolie (30) von einer Vorratsrolle (32) zum Rahmen (10) vorgesehen ist,
daß am Rahmen (10) zwei parallele, gegenüberliegende Konsolen (48, 50) gelagert sind, die in Richtung aufeinanderzu und auseinander bewegbar sind,
daß an jeder der Konsolen (48, 50) zumindest eine Unterdruck-Saugeinrichtung (72 bis 78) angeordnet ist, die mit der Außenseite der schlauchförmigen Kunststofffolie zusammenwirkt,
daß an jeder Konsole (48, 50) zumindest ein Fingerelement (86) angeordnet ist, das in das Innere der schlauchförmigen Kunststoffolie (30) eingreift,
und daß weiterhin an jeder Konsole (48, 50) eine Aufschiebe-Vorrichtung (92, 94) zum Aufschieben eines vorwählbaren Längenabschnittes der schlauchförmigen Kunststoffolie (30) auf die Fingerelemente (86) im gerafften Zustand angeordnet ist.

7. Vorrichtung nach den Ansprüchen 5 und 6, **dadurch gekennzeichnet, daß** die Mittel zur Heißschrumpfung von in dem Rahmen (10) eingebauten Gasbrenner (244, 312) gebildet sind.

8. Vorrichtung nach Anspruch 6, **dadurch gekennzeichnet, daß** an jeder Konsole (48, 50) je zwei Saugeinrichtungen (72, 74 bzw. 76, 78) und je zwei Fingerelemente (86) angeordnet sind, und daß sowohl die Saugeinrichtungen (72 bis 78) als auch die Fingerelemente (86) einer jeden Konsole (48, 50) in Längsrichtung der Konsole, d. h. quer zur Bewegungsrichtung der Konsole bewegbar geführt sind.

9. Vorrichtung nach Anspruch 8, **dadurch gekennzeichnet, daß** jeder Saugeinrichtung (72 bis 78) ein Fingerelement (86) zugeordnet ist und daß die aus Saugeinrichtung und Fingerelement bestehende Einheit gemeinsam bewegbar ist.

10. Vorrichtung nach einem der Ansprüche 6 bis 9, **dadurch gekennzeichnet, daß** die Fingerelemente (86) aus ihrer vertikalen Funktionsstellung in eine insbesondere horizontale Stellung verschwenkbar gelagert sind.

11. Vorrichtung nach einem der Ansprüche 9 bis 13, **dadurch gekennzeichnet, daß** jedes Fingerelement (86) der zugehörigen Saugeinrichtung (72 bis 78) gegenüberliegend angeordnet ist.

12. Vorrichtung nach Anspruch 6, **dadurch gekennzeichnet, daß** die Aufschiebe-Vorrichtung von einem antreibbaren Drehelement (92, 94) gebildet ist, welches derart im Bereich eines Fingerelements (86) angeordnet ist, daß es die Folie (30) zwischen sich und dem Fingerlement (86) aufnimmt.

13. Vorrichtung nach Anspruch 12, **dadurch gekennzeichnet, daß** das antreibbare Drehelement als parallel zur Konsole (48, 50) verlaufende Welle (92, 94) ausgebildet ist, die im Bereich der beiden Fingerlemente (86) mit je einer Friktionsschicht (92a, 94a) versehen ist.

14. Vorrichtung nach Anspruch 12 oder 13, **dadurch gekennzeichnet, daß** das antreibbare Drehelement (92, 94) in einer zu seiner Drehachse radialen Richtung federnd gelagert ist.

15. Vorrichtung nach den Ansprüchen 5 und 6, **dadurch gekennzeichnet, daß** die schlauchförmige bzw. bahnförmige Kunststoffolie (30) in ihrem zusammengefalteten Zustand auf jeder Seite einen Doppelfalz besitzt, d. h. an jeder Seite einen nach innen umgelegten Rand (42) und zwei nach außen weisende Kanten (44, 46),
und daß auf den Konsolen (48, 50) bewegbare Greifer (90) derart montiert sind, daß sie die schlauchförmige Kunststoffolie (30) an den vier nach außen weisenden Kanten (44, 46) zum Zwecke des vorläufigen Aufweitens der schlauchförmigen Kunststoffolie klemmen.

16. Vorrichtung nach Anspruch 15, **dadurch gekennzeichnet, daß** auf jeder Saugeinrichtung (72 bis 78) je ein Greifer (90) verschwenkbar angeordnet ist.

17. Vorrichtung nach Anspruch 15, **dadurch gekennzeichnet, daß** das Folienmaterial (30) aus Polyäthylen einer Stärke zwischen 50 $\mu$ und 250 $\mu$, vorzugsweise zwischen 80 $\mu$ und 150 $\mu$, besteht.

18. Vorrichtung nach Anspruch 5 oder 7, **dadurch gekennzeichnet, daß** Mittel zum Fernhalten der bei der Heißschrumpfung erzeugten Wärme (236, 238, 252) von der Zuführ- und Schneideinrichtung (222, 222') vorgesehen sind.

19. Vorrichtung nach Anspruch 18, **dadurch gekennzeichnet, daß** die Zuführ- und Schneideinrichtung (222) relativ zum Verpackungsgut (204) aus ihrer Betriebsstellung (A) oberhalb des Verpackungsguts (204) in eine vor Wärmeeinflüssen weitgehend geschützte Position (B) verschiebbar ist.

20. Vorrichtung nach Anspruch 19, **dadurch gekennzeichnet, daß** die Zuführ- und Schneideinrichtung aus ihrer Betriebsstellung (A) insbesondere in horizontaler Richtung zum Vorratswickel (212) hin verschiebbar ist.

21. Vorrichtung nach Anspruch 20, **dadurch gekennzeichnet, daß** in der Zuführbahn der Kunststoffolie (210) zwischen Zuführ- und Schneideinrichtung (222) und Vorratswickel (212) eine Puffereinrichtung (216, 228) zum Längenausgleich der Zuführbahn zwischen Zuführ- und Schneideinrichtung (222) und Vorratswickel (212) bei unterschiedlichen Positionen (A bzw. B) der Zuführ- und Schneideinrichtung (222) vorgesehen ist,

22. Vorrichtung nach Anspruch 21, **dadurch gekennzeichnet,** daß die Puffereinrichtung von mindestens einer beweglichen Umlenkrolle (216) für die Kunststoffolie (210) gebildet ist.

23. Vorrichtung nach Anspruch 18, **dadurch gekennzeichnet, daß** die Mittel zum Fernhalten der bei der Heißschrumpfung erzeugten Wärme von einer Gebläseeinrichtung (236, 238) gebildet sind, die einen von der Zuführ- und Schneideinrichtung (222') weg gerichteten Luftstrom erzeugt.

24. Vorrichtung nach Anspruch 23, **dadurch gekennzeichnet, daß** die Gebläseeinrichtung (236, 238) einen im wesentlichen senkrecht nach unten gerichteten Luftstrom erzeugt.

25. Vorrichtung nach Anspruch 24, **dadurch gekennzeichnet, daß** die Gebläseeinrichtung (236, 238) an der Zuführ- und Schneideinrichtung (222') angeordnet ist.

26. Vorrichtung nach Anspruch 25, **dadurch gekennzeichnet, daß** die Austrittsöffnungen (240, 242) der Gebläseeinrichtung (236, 238) beidseitig der Austrittsöffnung der Zuführ- und Schneideinrichtung (222) für die Kunststoffolie (210) angeordnet sind.

27. Vorrichtung nach Anspruch 5 und 7, **dadurch gekennzeichnet, daß** die aus dem Rahmen (202) austretende Heißluft zumindest teilweise wieder in diesen zurückführbar ist.

28. Vorrichtung nach einem der Ansprüche 5 bis 27, **dadurch gekennzeichnet, daß** der Rahmen (202) als im wesentlichen allseitig geschlossenes Hohlprofil (246) ausgebildet ist, daß die aus dem Rahmen austretende Heißluft an dessen unterem Bereich austritt, daß im oberen Bereich der innenliegenden Seite (250) des Rahmens (202) Eintrittsöffnungen (252) für die aufsteigende Heißluft ausgebildet sind und daß im Inneren des Rahmens (202) Mittel (258) vorgesehen sind, um durch die Eintrittsöffnungen (252) Heißluft anzusaugen.

29. Vorrichtung nach Anspruch 28, **dadurch gekennzeichnet, daß** innerhalb des Rahmens (202) zumindest eine Sauggebläseeinrichtung oder mehrere Ventilatoren (258) angeordnet sind.

30. Vorrichtung nach Anspruch 7, **dadurch gekennzeichnet, daß** der Strömungskanal (336) zwischen den Gasbrennern (312) und den Austrittsöffnungen (334) um insgesamt 180° umgelenkt ist.

31. Vorrichtung nach Anspruch 30, **dadurch gekennzeichnet, daß** der Strömungskanal (336) eine erste Umlenkung in einem ersten Umlenksinn und eine zweite Umlenkung in einem dem ersten Umlenksinn entgegengesetzten zweiten Umlenksinn umfaßt.

32. Vorrichtung nach Anspruch 31, **dadurch gekennzeichnet, daß** der Strömungskanal (336) eine sich an die zweite Umlenkung anschließende dritte Umlenkung im ersten Umlenksinn umfaßt.

**33.** Vorrichtung nach Anspruch 31 oder 32, **dadurch gekennzeichnet, daß** eine der Umlenkungen, vorzugsweise die zweite Umlenkung, etwa 180° beträgt.

**34.** Vorrichtung nach einem der Ansprüche 31 bis 33, **dadurch gekennzeichnet, daß** eine der Umlenkungen, vorzugsweise die sich an den Brenner (312) anschließende erste Umlenkung, etwa 90° beträgt.

**35.** Vorrichtung nach einem der Ansprüche 30 bis 34, **dadurch gekennzeichnet, daß** der Strömungskanal (336) zumindest teilweise, vorzugsweise jedoch vollständig mit einem hitzedämmenden Material (338) wie insbesondere Asbest ausgekleidet ist.

**36.** Vorrichtung nach einem der Ansprüche 30 bis 35, **dadurch gekennzeichnet, daß** das Gehäuse (302) zumindest im Bereich des Strömungskanals (336) im Querschnitt im wesentlichen winkelförmig ausgebildet ist,
daß im einen Schenkel (308) des Winkels die Brenneröffnung des Brenners (312) angeordnet ist und die Ausströmrichtung der den Brenner (312) verlassenden, erhitzten Gase mit der Richtung dieses Schenkels (308) im wesentlichen übereinstimmt,
daß im anderen Schenkel (310) des Winkels eine Umlenkplatte (324) angeordnet ist, die vom Ende (326) dieses Schenkels (310) beabstandet ist und an der diesem Ende (326) gegenüberliegenden Gehäusewandung (322) dichtend anschließt,
und daß die Austrittsöffnung (334) im Bereich der der Umlenkplatte (324) gegenüberliegenden äußeren Gehäusewandung (328) des anderen Schenkels (310) bzw. der sich hieran in Richtung zur Umlenkplatte (324) hin anschließenden äußeren Gehäusewandung (322) des einen Schenkels (308) angeordnet ist.

**37.** Vorrichtung nach Anspruch 36, **dadurch gekennzeichnet, daß** die Austrittsöffnung (334) im Bereich der äußeren Kante der beiden Schenkel (308, 310) angeordnet ist.

**38.** Vorrichtung nach Anspruch 36 oder 37, **dadurch gekennzeichnet, daß** die beiden Schenkel (308, 310) des Winkels unter etwa 90° angeordnet sind.

**39.** Vorrichtung nach einem der Ansprüche 36 bis 38, **dadurch gekennzeichnet, daß** die Austrittsöffnung (334) düsenförmig ausgebildet ist und daß die Austrittsrichtung einen spitzen bzw. einen stumpfen Winkel mit den beiden Schenkeln (308, 310) einnimmt.

**40.** Vorrichtung nach einem der Ansprüche 30 bis 39, **dadurch gekennzeichnet, daß** dem Brenner (312) gegenüberliegend eine Umlenkplatte (324) für die erhitzten Gase angeordnet ist, die vollständig im Innern des Gehäuses (302) angeordnet ist.

## Claims

**1.** Process for packing articles with a plastics film in web or tubular form, characterised in that the plastics film is stretched by 20-50% and, in the stretched state, is applied to the entire side surfaces of the article (24) and in that, after applying the plastics film to the article (24), only the upper and/or lower end regions of the film packaging are additionally shrunk by means of heat exposure.

**2.** Process according to Claim 1, characterised in that, in a first step, the tubular plastics film (30) is gripped at its free end and opened, in that, in a second step, it is gathered, in that in a third step, it is stretched in the gathered state to the required cross-section and in that, in a fourth step, while at the same time fixing one of the ends of the plastics film web to be cut to length in relation to the article (24), it is drawn in the gathered state over the article (24), preferably from top to bottom.

**3.** Process according to Claim 2, characterised in that, before drawing over the article (24), the tubular plastics film (30) is welded together transversely at the end opposite the free end.

**4.** Process according to Claim 3, characterised in that the opening of the tubular plastics film (30) is performed by the effect of suction acting on the outer side of the plastics film (30).

**5.** Apparatus for packing articles with a plastics film in web or tubular form for carrying out the process according to one or more of Claims 1 to 4, characterised in that a horizontal frame (10), which can move in the vertical direction on a stand (22), bears a device for stretching and applying the plastics film in the stretched state to the article and means for heat shrinkage.

**6.** Apparatus according to Claim 5, characterised in that a feeding device (34 to 40) is provided for feeding the plastics film (30) from a supply roll (32) to the frame (10), in that mounted on the frame (10) are two parallel, opposite brackets (48, 50), which are movable in the direction towards each other and away from each other, in that arranged on each of the brackets (48, 50) is at least one vacuum suction device (72 to 78), which interacts with the outer side of the tubular plastics film, in that arranged on each bracket (48, 50) is at least one finger element (86), which engages in the interior of the tubular plastics film (30), and in that also arranged on each bracket (48, 50) is a pushing-on device (92, 94) for pushing a preselectable section of length of the tubular plastics film (30) onto the finger elements (86) in the gathered state.

7. Apparatus according to Claims 5 and 6, characterised in that the means for heat shrinkage are formed by gas burners (244, 312), built-in in the frame (10).

8. Apparatus according to Claim 6, characterised in that arranged on each bracket (48, 50) are two suction devices (72, 74 and 76, 78 respectively) and two finger elements (86) in each case, and in that both the suction devices (72 to 78) and the finger elements (86) of each bracket (48, 50) are guided movably in the longitudinal direction of the bracket, i.e. transversely to the direction of movement of the bracket.

9. Apparatus according to Claim 8, characterised in that each suction device (72 to 78) is assigned a finger element (86) and in that the unit comprising suction device and finger element can be moved jointly.

10. Apparatus according to one of Claims 6 to 9, characterised in that the finger elements (86) are mounted in such a way that they can swivel out of their vertical functional position into an, in particular, horizontal position.

11. Apparatus according to one of Claims 9 to 13, characterised in that each finger element (86) is arranged opposite the associated suction device (72 to 78).

12. Apparatus according to Claim 6, characterised in that the pushing-on device is formed by a drivable rotary element (92, 94), which is arranged in the region of a finger element (86) in such a way that it receives the film (30) between itself and the finger element (86).

13. Apparatus according to Claim 12, characterised in that the drivable rotary element is designed as shaft (92, 94) which runs parallel to the bracket (48, 50) and is provided in the region of the two finger elements (86) with a friction coating (92a, 94a) in each case.

14. Apparatus according to Claim 12 or 13, characterised in that the drivable rotary element (92, 94) is mounted resiliently in a direction radial to its axis of rotation.

15. Apparatus according to Claims 5 and 6, characterised in that the plastics film (30) in tubular or web form has in its folded-together state, a double fold on each side, i.e. an inwardly turned-over border (42) and two outwardly pointing edges (44, 46) on each side, and in that movable grippers (90) are fitted on the brackets (48, 50) in such a way that they clamp the tubular plastics film (30) at the four outwardly pointing edges (44, 46) for the purpose of temporarily widening the tubular plastics film.

16. Apparatus according to Claim 15, characterised in that a gripper (90) is arranged in such a way that it can swivel on each suction device (72 to 78).

17. Apparatus according to Claim 15, characterised in that the film material (30) consists of polyethylene of a thickness between 50 $\mu$ and 250 $\mu$, preferably between 80 $\mu$ and 150 $\mu$.

18. Apparatus according to Claim 5 or 7, characterised in that means for keeping the heat (236, 238, 252) generated during heat shrinkage away from the feeding and cutting device (222, 222') are provided.

19. Apparatus according to Claim 18, characterised in that the feeding and cutting device (222) can be displaced in relation to the product being packed (204) out of its operating position (A) above the product being packed (204) into a position (B) substantially protected against heat effects.

20. Apparatus according to Claim 19, characterised in that the feeding and cutting device can be displaced out of its operating position (A), in particular in the horizontal direction, towards the supply roll (212).

21. Apparatus according to Claim 20, characterised in that, in the feeding path of the plastics film (210) between feeding and cutting device (222) and supply roll (212), a buffer device (216, 228) is provided for linear compensation of the feeding path between feeding and cutting device (222) and supply roll (212) in the case of different positions (A and B) of the feeding and cutting device (222).

22. Apparatus according to Claim 21, characterised in that the buffer device is formed by at least one movable deflection roller (216) for the plastics film (210).

23. Apparatus according to Claim 18, characterised in that the means for keeping away the heat generated during heat shrinkage are formed by a blower device (236, 238), which generates an air stream directed away from the feeding and cutting device (222').

24. Apparatus according to Claim 23, characterised in that the blower device (236, 238) generates an air stream directed essentially perpendicularly downwards.

25. Apparatus according to Claim 24, characterised in that the blower device (236, 238) is arranged on the feeding and cutting device (222').

26. Apparatus according to Claim 25, characterised in that the outlet openings (240, 242) of the blower device (236, 238) are arranged on both sides of the outlet opening of the feeding and cutting device (222) for the plastics film (210).

27. Apparatus according to Claims 5 and 7, characterised in that the hot air emanating from the frame (202) can be at least partially fed back again into the latter.

28. Apparatus according to one of Claims 5 to 27, characterised in that the frame (202) is designed as a hollow profile (246) essentially closed on all sides, in that the hot air emanating from the frame exits at the lower region of the latter, in that inlet openings (252) for the rising hot air are formed in the upper region of the inner side (250) of the frame (202) and in that, inside the frame (202), means (258) are provided in order to suck hot air in through the inlet openings (252).

29. Apparatus according to Claim 28, characterised in that at least one suction-blower device or a plurality of fans (258) are arranged within the frame (202).

30. Apparatus according to Claim 7, characterised in that the flow duct (336) between the gas burners (312) and the outlet openings (334) is deflected by, altogether, 180°.

31. Apparatus according to Claim 30, characterised in that the flow duct (336) comprises a first deflection in a first deflecting sense and a second deflection in a second deflecting sense, opposite to the first deflecting sense.

32. Apparatus according to Claim 31, characterised in that the flow duct (336) comprises a third deflection, in the first deflecting sense, adjoining the second deflection.

33. Apparatus according to Claim 31 or 32, characterised in that one of the deflections, preferably the second deflection, amounts to about 180°.

34. Apparatus according to one of Claims 31 to 33, characterised in that one of the deflections, preferably the first deflection adjoining the burner (312), amounts to about 90°.

35. Apparatus according to one of Claims 30 to 34, characterised in that the flow duct (336) is at least partially, but preferably completely, lined with a heat-insulating material (338), such as in particular asbestos.

36. Apparatus according to one of Claims 30 to 35, characterised in that the housing (302) is essentially angularly designed in cross-section, at least in the region of the flow duct (336), in that the burner opening of the burner (312) is arranged in the one leg (308) of the angle and the outflow direction of the heated gases leaving the burner (312) essentially coincides with the direction of this leg (308), in that arranged in the other leg (310) of the angle is a deflecting plate (324), which is spaced away from the end (326) of this leg (310) and adjoins in a sealing manner the housing wall (322) opposite this end (326), and in that the outlet opening (334) is arranged in the region of the outer housing wall (328) of the other leg (310), which wall is opposite the deflecting plate (324), and of the outer housing wall (322) of the one leg (308), which wall adjoins the said other leg in the direction of the deflecting plate (324).

37. Apparatus according to Claim 36, characterised in that the outlet opening (334) is arranged in the region of the outer edge of the two legs (308, 310).

38. Apparatus according to Claim 36 or 37, characterised in that the two legs (308, 310) of the angle are arranged at about 90°.

**39.** Apparatus according to one of Claims 36 to 38, characterised in that the outlet opening (334) is designed in the form of a nozzle and in that the outlet direction assumes an acute or an obtuse angle with the two legs (308, 310).

**40.** Apparatus according to one of Claims 30 to 39, characterised in that arranged opposite the burner (312) is a deflecting plate (324) for the heated gases, which plate is arranged completely inside the housing (302).

**Revendications**

**1.** Procédé pour emballer des articles dans une feuille thermoplastique sous forme de bande ou sous forme tubulaire, caractérisé en ce que la feuille thermoplastique est étirée de 20 à 50% et est appliquée à l'état étiré sur l'ensemble des surfaces latérales de l'article (24), et en ce que seules les régions d'extrémité supérieure et/ou inférieure de l'emballage en feuille sont additionnellement rétractées par application de chaleur après mise en place de la feuille thermoplastique sur l'article (24).

**2.** Procédé selon la revendication 1, caractérisé en ce que la feuille thermoplastique de forme tubulaire (30) est saisie et ouverte par son extrémité libre au cours d'une première étape, contractée au cours d'une seconde étape, étirée selon la section nécessaire alors qu'elle est à l'état contracté au cours d'une troisième étape, et tirée au cours d'une quatrième étape alors qu'elle est à l'état contracté et de préférence du haut vers le bas sur l'article (24) tout en fixant simultanément l'une des extrémités de la bande thermoplastique à découper à longueur par rapport à l'article (24).

**3.** Procédé selon la revendication 2, caractérisé en ce que la feuille thermoplastique de forme tubulaire (30) est soudée transversalement à son extrémité qui est à l'opposé de son extrémité libre avant d'être tirée sur l'article (24).

**4.** Procédé selon la revendication 3, caractérisé en ce que l'ouverture de la feuille thermoplastique de forme tubulaire (30) est obtenue par aspiration appliquée sur le côté extérieur de la feuille thermoplastique (30).

**5.** Dispositif d'emballage d'articles au moyen d'une feuille thermoplastique en forme de bande ou de forme tubulaire pour la mise en oeuvre du procédé selon l'une ou plusieurs des revendications 1 à 4, caractérisé en ce qu'un cadre horizontal (10) pouvant se déplacer en direction verticale sur un support (22) supporte un dispositif pour étirer et appliquer la feuille thermoplastique à l'état étiré sur l'article, et des moyens pour sa rétraction à chaud.

**6.** Dispositif selon la revendication 5, caractérisé en ce qu'un dispositif d'alimentation (34 à 40) destiné à faire avancer la feuille thermoplastique (30) est prévu entre un rouleau de réserve (32) et le cadre (10), en ce que deux consoles (48, 50) parallèles et opposées sont montées sur le cadre (10) et sont mobiles dans les directions qui les rapprochent et les écartent, en ce qu'au moins un dispositif d'aspiration par dépression (72 à 78) est disposé sur chacune des consoles (48, 50), qui coopère avec les côtés extérieurs de la feuille thermoplastique de forme tubulaire, en ce qu'un élément en forme de doigt (86) au moins est prévu sur chaque console (48, 50), qui pénètre à l'intérieur de la feuille thermoplastique de forme tubulaire (30), et en ce qu'en outre un dispositif d'avance (92, 94) pour faire avancer une section dont la longueur peut être choisie à l'avance de la feuille thermoplastique de forme tubulaire (30) sur les éléments en forme de doigts (86) à l'état contracté est monté sur chaque console (48, 50).

**7.** Dispositif selon les revendications 5 et 6, caractérisé en ce que des moyens destinés à la rétraction à chaud sont constitués par des brûleurs à gaz (244, 312) incorporés dans le cadre (10).

**8.** Dispositif selon la revendication 6, caractérisé en ce que deux dispositifs d'aspiration (72, 74 ou 76, 78) et deux éléments en forme de doigts (86) sont respectivement disposés sur chaque console (48, 50) et en ce qu'aussi bien les dispositifs d'aspiration (72 à 78) que les éléments en forme de doigts (86) de chaque console (48, 50) sont guidés de façon mobile en direction longitudinale des consoles, c'est-à-dire transversalement à la direction du mouvement des consoles.

**9.** Dispositif selon la revendication 8, caractérisé en ce qu'un élément en forme de doigt (86) est associé à chaque dispositif d'aspiration (72 à 78) et en ce que l'ensemble constitué par le dispositif d'aspiration et l'élément en forme de doigt peut être déplacé en commun.

**10.** Dispositif selon l'une quelconque des revendications 6 à 9, caractérisé en ce que les éléments en forme de doigts (86) sont montés de façon à pouvoir être pivotés à partir de leur position fonctionnelle verticale vers une position en particulier horizontale.

11. Dispositif selon les revendications 9 et 10, caractérisé en ce que chaque élément en forme de doigt (86) est disposé face au dispositif d'aspiration associé (72 à 78).

12. Dispositif selon la revendication 6, caractérisé en ce que le dispositif d'avance est constitué par un élément pouvant être entraîné en rotation (92, 94) qui est disposé à proximité d'un élément en forme de doigt (86) de manière que la feuille (30) soit serrée entre lui-même et l'élément en forme de doigt (90).

13. Dispositif selon la revendication 12, caractérisé en ce que l'élément pouvant être entraîné en rotation est constitué sous la forme d'un arbre (92, 94) parallèle aux consoles (48, 50) et muni à proximité de chacun des éléments en forme de doigts (86) d'une couche de friction respective (92a, 94a).

14. Dispositif selon la revendication 12 ou 13, caractérisé en ce que l'élément pouvant être entraîné en rotation (92, 94) est monté élastiquement dans une direction radiale par rapport à son axe de rotation.

15. Dispositif selon les revendications 5 et 6, caractérisé en ce que la feuille thermoplastique de forme tubulaire ou en forme de bande (30) comprend dans son état replié et de chaque côté un double pli, c'est-à-dire sur chaque côté un bord (42) replié vers l'intérieur et deux bords (44, 46) tournés vers l'extérieur, et en ce que des éléments de saisie mobile (90) sont montés sur les consoles (48, 50) de manière à pouvoir serrer les quatre bords (44, 46) tournés vers l'extérieur pour élargir provisoirement la feuille thermoplastique de forme tubulaire.

16. Dispositif selon la revendication 15, caractérisé en ce qu'un élément de saisie (90) est monté de façon pivotante sur chaque dispositif d'aspiration (72 à 78)

17. Dispositif selon la revendication 15, caractérisé en ce que le matériau (30) de la feuille est du polyéthylène d'une épaisseur comprise entre 50 $\mu$ et 250 $\mu$, et de préférence entre 80 $\mu$ et 150 $\mu$.

18. Dispositif selon la revendication 5 ou 7, caractérisé en ce que sont prévus des moyens pour protéger le dispositif d'alimentation et de coupe (222, 222') de la chaleur (236, 238, 252) produite lors de la rétraction à chaud.

19. Dispositif selon la revendication 18, caractérisé en ce que le dispositif d'alimentation et de coupe (222) peut être déplacé par rapport à l'article à emballer (204) de sa position de fonctionnement (A) située au-dessus de l'article à emballer (204) vers une position (B) qui est largement protégée de l'influence de la chaleur.

20. Dispositif selon la revendication 19, caractérisé en ce que le dispositif d'alimentation et de coupe peut être déplacé vers la bobine de réserve (212) à partir de sa position de fonctionnement (A), en particulier en direction horizontale.

21. Dispositif selon la revendication 20, caractérisé en ce qu'il est prévu sur le trajet d'amenée de la feuille thermoplastique (210) entre le dispositif d'alimentation et de coupe (222) et la bobine de réserve (212) un dispositif formant tampon (216, 228) pour adapter la longueur du trajet d'amenée entre le dispositif d'alimentation et de coupe (222) et la bobine de réserve (212) quand le dispositif d'alimentation et de coupe (222) occupe des positions différentes (A ou B).

22. Dispositif selon la revendication 21, caractérisé en ce que le dispositif formant tampon est constitué par au moins un rouleau de renvoi mobile (216) destiné à la feuille thermoplastique (210).

23. Dispositif selon la revendication 18, caractérisé en ce que les moyens de protection contre la chaleur produite par la rétraction à chaud sont constitués par un dispositif à soufflantes (236, 238) qui produit un courant d'air s'éloignant du dispositif d'alimentation et de coupe (222').

24. Dispositif selon la revendication 23, caractérisé en ce que le dispositif à soufflantes (236, 238) produit un courant d'air sensiblement vertical et dirigé vers le bas.

25. Dispositif selon la revendication 24, caractérisé en ce que le dispositif à soufflantes (236, 238) est associé au dispositif d'alimentation et de coupe (222').

26. Dispositif selon la revendication 25, caractérisé en ce que des ouvertures de sortie (240, 242) du dispositif à soufflantes (236, 238) sont disposées de chaque côté de l'ouverture de sortie du dispositif d'alimentation et de coupe (222) destiné à la feuille thermoplastique (210).

27. Dispositif selon les revendications 5 et 7, caractérisé en ce que l'air chaud sortant du cadre (202) peut être renvoyé au moins en partie dans ce dernier.

28. Dispositif selon l'une quelconque des revendications 5 à 27, caractérisé en ce que le cadre (202) est constitué essentiellement par un profilé creux (246) fermé sur tous ses côtés, en ce que l'air chaud sortant du cadre sort par sa partie inférieure, en ce que des ouvertures d'entrée (252) pour l'air chaud qui remonte sont constituées dans la partie supérieure du côté (250) du cadre (202) situé à l'intérieur et en ce qu'à l'intérieur du cadre (202) sont prévus des moyens (258) pour aspirer l'air chaud par les ouvertures d'entrée (252).

29. Dispositif selon la revendication 28, caractérisé en ce qu'au moins un dispositif à soufflantes ou plusieurs ventilateurs (258) sont montés à l'intérieur du cadre (202).

30. Dispositif selon la revendication 7, caractérisé en ce que le canal de passage (336) entre les brûleurs à gaz (312) et les ouvertures de sortie (334) est coudé dans son ensemble sur 180°.

31. Dispositif selon la revendication 30, caractérisé en ce que le canal de passage (336) comprend un premier coude dans un premier sens et un second coude dans un second sens qui est opposé au premier.

32. Dispositif selon la revendication 31, caractérisé en ce que le canal de passage (336) comprend un troisième coude se raccordant au second coude.

33. Dispositif selon la revendication 31 ou 32, caractérisé en ce que l'un des coudes, et de préférence le second coude, forme un angle d'environ 180°.

34. Dispositif selon l'une quelconque des revendications 31 à 33, caractérisé en ce que l'un des coudes, et de préférence le premier coude qui est raccordé au brûleur (312), forme un angle d'environ 90°.

35. Dispositif selon l'une quelconque des revendications 30 à 34, caractérisé en ce que le canal de passage (336) est revêtu au moins en partie et de préférence en totalité d'un matériau calorifuge (338) tel qu'en particulier de l'amiante.

36. Dispositif selon l'une quelconque des revendications 30 à 35, caractérisé en ce que le carter (302) est constitué en section sensiblement sous une forme angulaire au moins dans la région du canal de passage (336), en ce que l'ouverture du brûleur (312) est disposée dans un côté (308) de l'angle et la direction de sortie des gaz chauds qui quittent le brûleur (312) concorde sensiblement avec la direction de ce côté (308), en ce que dans l'autre côté (310) de l'angle est montée une plaque de renvoi (324) située à une certaine distance de l'extrémité (326) de ce côté (310) et se raccorde de façon étanche à la paroi (322) du carter qui est à l'opposé de cette extrémité (326), et en ce que l'ouverture de sortie (334) est prévue dans la paroi externe (328) de l'autre côté (310) qui est face à la plaque de renvoi (324), ou de la paroi extérieure (322) du premier côté (328) qui s'y raccorde en direction de la plaque de renvoi (324).

37. Dispositif selon la revendication 36, caractérisé en ce que l'ouverture de sortie (334) est prévue dans la région des bords extérieurs des deux côtés (308, 310).

38. Dispositif selon la revendication 36 ou 37, caractérisé en ce que les deux côtés (308, 310) de l'angle sont disposés en formant un angle de sensiblement 90°.

39. Dispositif selon l'une quelconque des revendications 36 à 38, caractérisé en ce que l'ouverture de sortie (334) est constituée sous forme d'une buse et en te que la direction de la sortie forme un angle aigu ou un angle obtus avec les deux côtés (308, 310).

40. Dispositif selon l'une quelconque des revendications 30 à 39, caractérisé en ce qu'un plaque de renvoi (324) destinée aux gaz chauffés est disposée face au brûleur (312) et est montée en totalité à l'intérieur du carter (302).

Fig.1

19

Fig.2

# Fig. 3

Fig. 4

Fig.5

Fig. 6

# Fig. 7

Fig. 8

Fig. 9

EP 0 285 855 B1